# EUROPEAN PATENT APPLICATION

(11) **EP 4 738 902 A2**
(43) Date of publication of application: **06.05.2026**
(21) Application number: 26160193.4
(22) Date of filing: 09.02.2021
(51) Int. Cl.: H04W 12/02

(54) **METHOD AND APPARATUS FOR PRIVACY PROTECTION**

(30) Priority: 17.02.2020 WO PCT/CN2020/075507
(62) Divisional of application: 21757116.5
(71) Applicant: Telefonaktiebolaget LM Ericsson (publ), 164 83 Stockholm (SE)
(72) Inventor: SULTANA, Shabnam, Quebec, H3W2N3 (CA); GAN, Juying, Shanghai, 200335 (CN); FU, Zhang, 120 78 Stockholm (SE)
(74) Representative: Haseltine Lake Kempner LLP

(57) **Abstract**

There is provided a method at a first terminal device. The method comprises establishing (401) a unicast link with a second terminal device. The method comprises deciding (402) to change from old identifier(s) to new identifier(s) for the first terminal device. The method comprises sending (402) a link identifier update request message to the second terminal device using old identifier(s) of the second terminal device. The link identifier update request message comprises the new identifier(s) of the first terminal device. The method comprises receiving (403) a link identifier update response message from the second terminal device using the old identifier(s) of the first terminal device. The link identifier update response message comprises new identifier(s) of the second terminal device.

## Description

### TECHNICAL FIELD

The present disclosure relates generally to the technology of wireless communication, and in particular, to methods and apparatuses for privacy protection.

### BACKGROUND

This section introduces aspects that may facilitate better understanding of the present disclosure. Accordingly, the statements of this section are to be read in this light and are not to be understood as admissions about what is in the prior art or what is not in the prior art.

Communication service providers and network operators have been continually facing challenges to deliver value and convenience to consumers by, for example, providing compelling network services and performance. With the evolution of wireless communication, a requirement for supporting device to device (D2D) such as Vehicle-to-Everything (V2X) communication feature which may target at both commercial and public safety applications has been proposed. Wireless communication networks such as long-term evolution (LTE) and new radio (NR) are expected to support various services over a D2D link (such as a sidelink (SL) and/or PC5 link) between devices such as user equipments (UEs). Radio resources may be configured for traffic communications over the D2D link such as PC5 link to meet different quality of service (QoS) requirements of the traffics.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

To fullfill a privacy requirement, it is required that both UEs change their link identifers (IDs) such as Layer2 IDs at a same time in some senarios. For example, it is required that when one of a pair of terminal devices changes its link identifier (such as Layer-2 ID), the other one of the pair of terminal devices also changes its link identifier (such as Layer-2 ID). However, existing solutions may not guarantee that both UEs change their link identifers such as Layer2 IDs at the same time. For excample, if one of a pair of terminal devices does not change its link identifier, then it will violate the privacy policy of the other one of the pair of terminal devices.

Certain aspects of the present disclosure and their embodiments may provide solutions to these or other challenges. There are, proposed herein, various embodiments which address one or more of the issues disclosed herein.

A first aspect of the present disclosure provides a method at a first terminal device. The method comprises obtaining at least one privacy policy of the first terminal device. The at least one privacy policy of the first terminal device is related to a link identifier change. The method further comprises transmitting a request message including information regarding the at least one privacy policy of the first terminal device.

In embodiments of the present disclosure, obtaining the at least one privacy policy of the first terminal device may comprise at least one of obtaining the at least one privacy policy of the first terminal device from a network node; obtaining the at least one privacy policy of the first terminal device from a server; and obtaining the at least one privacy policy of the first terminal device from the first terminal device.

In embodiments of the present disclosure, the server may be an application server.

In embodiments of the present disclosure, the network node may be a policy control function entity.

In embodiments of the present disclosure, the at least one privacy policy of the first terminal device may comprise a policy of whether a peer terminal device is required to change the link identifier of the peer terminal device when the first terminal device changes the link identifier of the first terminal device.

In embodiments of the present disclosure, the information regarding the at least one privacy policy of the first terminal device may comprise an indication of the at least one privacy policy of the first terminal device.

In embodiments of the present disclosure, the indication of the at least one privacy policy of the first terminal device may be a Boolean value.

In embodiments of the present disclosure, the method may further comprise receiving, from a second terminal device, a response message including a result of the request. The second terminal device is a peer terminal device of the first terminal device

In embodiments of the present disclosure, the response message may be a reject message when the at least one privacy policy of the first terminal device does not match at least one corresponding privacy policy of the second terminal device.

In embodiments of the present disclosure, the response message may be an accept message when the at least one privacy policy of the first terminal device matches the at least one corresponding privacy policy of the second terminal device. In embodiments of the present disclosure, when the response message is an accept message, the method may further comprise: when the response message does not include information regarding at least one corresponding privacy policy of the second terminal device, releasing the link between the first terminal device and the second terminal device; and/or when the response message further includes the information regarding at least one corresponding privacy policy of the second terminal device, determining whether the at least one privacy policy of the first terminal device matches the at least one corresponding privacy policy of the second terminal device; when the at least one privacy policy of the first terminal device matches the at least one corresponding privacy policy of the second terminal device, transmitting data over the link between the first terminal device and the second terminal device; and when the at least one privacy policy of the first terminal device does not match the at least one corresponding privacy policy of the second terminal device, releasing the link between the first terminal device and the second terminal device.

In embodiments of the present disclosure, the information regarding at least one corresponding privacy policy of the second terminal device may comprise an indication of the at least one corresponding privacy policy of the second terminal device.

In embodiments of the present disclosure, the indication of the at least one corresponding privacy policy of the second terminal device may be a Boolean value.

In embodiments of the present disclosure, when the request message is transmitted via broadcast, the second terminal device may use at least one announced service over a unicast link with the first terminal device.

In embodiments of the present disclosure, the link identifier may be a layer-2 identifier.

In embodiments of the present disclosure, the link may be a PC5 unicast link.

In embodiments of the present disclosure, the request message may comprise at least one of a link establishment request message; a link identifier update request message; and a link modification request message.

In embodiments of the present disclosure, the request message may be transmitted via broadcast or unicast.

A second aspect of the present disclosure provides a method at a second terminal device. The method comprises obtaining at least one privacy policy of the second terminal device. The at least one privacy policy of the second terminal device is related to a link identifier change. The method further comprises receiving a request message from a first terminal device. The method further comprises, when the request message includes information regarding at least one corresponding privacy policy of the first terminal device, determining whether the at least one corresponding privacy policy of the first terminal device matches the at least one privacy policy of the second terminal device.

In embodiments of the present disclosure, obtaining the at least one privacy policy of the second terminal device may comprise at least one of obtaining the at least one privacy policy of the second terminal device from a network node; obtaining the at least one privacy policy of the second terminal device from a server; and obtaining the at least one privacy policy of the second terminal device from the second terminal device.

In embodiments of the present disclosure, the network node may be a policy control function entity.

In embodiments of the present disclosure, the at least one corresponding privacy policy of the first terminal device may comprise a policy of whether a peer terminal device is required to change the link identifier of the peer terminal device when the first terminal device changes the link identifier of the first terminal device.

In embodiments of the present disclosure, the at least one privacy policy of the second terminal device may comprise a policy of whether a peer terminal device is required to change the link identifier of the peer terminal device when the second terminal device changes the link identifier of the second terminal device.

In embodiments of the present disclosure, the information regarding the at least one corresponding privacy policy of the first terminal device may comprise an indication of the at least one corresponding privacy policy of the first terminal device.

In embodiments of the present disclosure, the indication of the at least one corresponding privacy policy of the first terminal device may be a Boolean value.

In embodiments of the present disclosure, the method may further comprise transmitting, to the first terminal device, a response message including a result of the request.

In embodiments of the present disclosure, the response message may be a reject message when the at least one corresponding privacy policy of the first terminal device does not match the at least one privacy policy of the second terminal device or when the request message does not include information regarding at least one corresponding privacy policy of the first terminal device.

In embodiments of the present disclosure, the response message may be an accept message when the at least one corresponding privacy policy of the first terminal device matches the at least one privacy policy of the second terminal device.

In embodiments of the present disclosure, when the response message is an accept message, the response message may further include information regarding the at least one privacy policy of the second terminal device.

In embodiments of the present disclosure, the information regarding the at least one privacy policy of the second terminal device may comprise an indication of the at least one privacy policy of the second terminal device.

In embodiments of the present disclosure, the indication of the at least one privacy policy of the second terminal device may be a Boolean value.

In embodiments of the present disclosure, the request message may be received via broadcast or unicast.

In embodiments of the present disclosure, when the request message is received via broadcast, the second terminal device may use at least one announced service over a unicast link with the first terminal device.

A third aspect of the present disclosure provides a method at a policy provisioning entity. The method comprises determining at least one privacy policy of a terminal device. The at least one privacy policy is related to a link identifier change. The method further comprises sending the at least one privacy policy of the terminal device to the terminal device.

In embodiments of the present disclosure, the at least one privacy policy of the terminal device may comprise a policy of whether a peer terminal device is required to change the link identifier of the peer terminal device when the terminal device changes the link identifier of the terminal device.

In embodiments of the present disclosure, the policy provisioning entity may comprise at least one of a network node, a server and the policy provisioning entity in the terminal device.

A fourth aspect of the present disclosure provides a first terminal device, comprising: a processor; and a memory. The memory contains instructions executable by the processor, whereby the first terminal device is operative to obtain at least one privacy policy of the first terminal device. The at least one privacy policy of the first terminal device is related to a link identifier change. The first terminal device is further operative to transmit a request message including information regarding the at least one privacy policy of the first terminal device.

A fifth aspect of the present disclosure provides a second terminal device, comprising: a processor; and a memory. The memory contains instructions executable by the processor, whereby the second terminal device is operative to obtain at least one privacy policy of the second terminal device, wherein the at least one privacy policy of the second terminal device is related to a link identifier change. The second terminal device is further operative to receive a request message from a first terminal device. When the request message includes information regarding at least one corresponding privacy policy of the first terminal device. The second terminal device is further operative to determine whether the at least one corresponding privacy policy of the first terminal device matches the at least one privacy policy of the second terminal device.

A sixth aspect of the present disclosure provides a policy provisioning entity, comprising: a processor; and a memory. The memory contains instructions executable by the processor, whereby the policy provisioning entity is operative to determine at least one privacy policy of a terminal device, wherein the at least one privacy policy is related to a link identifier change. The policy provisioning entity is further operative to send the at least one privacy policy of the terminal device to the terminal device.

A seventh aspect of the present disclosure provides a first terminal device. The first terminal device comprises an obtaining module and a transmitting module. The obtaining module may be configured to obtain at least one privacy policy of the first terminal device. The at least one privacy policy of the first terminal device is related to a link identifier change. The transmitting module may be configured to transmit a request message including information regarding the at least one privacy policy of the first terminal device.

An eighth aspect of the present disclosure provides a second terminal device. The second terminal device comprises an obtaining module, a receiving module and a determining module. The obtaining module may be configured to obtain at least one privacy policy of the second terminal device, wherein the at least one privacy policy of the second terminal device is related to a link identifier change. The receiving module may be configured to receive a request message from a first terminal device. The determining module may be configured to determine whether the at least one corresponding privacy policy of the first terminal device matches the at least one privacy policy of the second terminal device when the request message includes information regarding at least one corresponding privacy policy of the first terminal device.

A ninth aspect of the present disclosure provides a policy provisioning entity. The policy provisioning entity comprises a determining module and a sending module. The determining module may be configured to determine at least one privacy policy of a terminal device. The at least one privacy policy is related to a link identifier change. The sending module may be configured to send the at least one privacy policy of the terminal device to the terminal device.

A tenth aspect of the present disclosure provides a communication system including a host computer including: processing circuitry configured to provide user data; and a communication interface configured to forward the user data to a cellular network for transmission to a terminal device. The cellular network includes a network node such as the policy provisioning entity above mentioned, and/or the terminal device such as the first terminal device or the second terminal device above mentioned.

In embodiments of the present disclosure, the system further includes the terminal device, wherein the terminal device is configured to communicate with the network node.

In embodiments of the present disclosure, the processing circuitry of the host computer is configured to execute a host application, thereby providing the user data; and the terminal device includes processing circuitry configured to execute a client application associated with the host application.

An eleventh aspect of the present disclosure provides a communication system including a host computer including: a communication interface configured to receive user data originating from a transmission from a terminal device; a network node. The transmission is from the terminal device to the network node. The network node is the policy provisioning entity above mentioned, and/or the terminal device is the first terminal device and the second terminal device above mentioned.

In embodiments of the present disclosure, the processing circuitry of the host computer is configured to execute a host application. The terminal device is configured to execute a client application associated with the host application, thereby providing the user data to be received by the host computer.

A twelfth aspect of the present disclosure provides a method implemented in a communication system which may include a host computer, a network node and a UE. The method may comprise providing user data at the host computer. Optionally, the method may comprise, at the host computer, initiating a transmission carrying the user data to the UE via a cellular network comprising the network node which may perform any step of the method according to the third aspect of the present disclosure.

A thirteenth aspect of the present disclosure provides a communication system including a host computer. The host computer may comprise processing circuitry configured to provide user data, and a communication interface configured to forward the user data to a cellular network for transmission to a UE. The cellular network may comprise a network node having a radio interface and processing circuitry. The network node's processing circuitry may be configured to perform any step of the method according to the third aspect of the present disclosure.

A fourteenth aspect of the present disclosure provides a method implemented in a communication system which may include a host computer, a network node and a UE. The method may comprise providing user data at the host computer. Optionally, the method may comprise, at the host computer, initiating a transmission carrying the user data to the UE via a cellular network comprising the network node. The UE may perform any step of the methods according to the first and second aspects of the present disclosure.

A fifteenth aspect of the present disclosure provides a communication system including a host computer. The host computer may comprise processing circuitry configured to provide user data, and a communication interface configured to forward user data to a cellular network for transmission to a UE. The UE may comprise a radio interface and processing circuitry. The UE's processing circuitry may be configured to perform any step of the methods according to the first and second aspects of the present disclosure.

A sixteenth aspect of the present disclosure provides a method implemented in a communication system which may include a host computer, a network node and a UE. The method may comprise, at the host computer, receiving user data transmitted to the network node from the UE which may perform any step of the methods according to the first and second aspects of the present disclosure.

A seventeenth aspect of the present disclosure provides a communication system including a host computer. The host computer may comprise a communication interface configured to receive user data originating from a transmission from a UE to a network node. The UE may comprise a radio interface and processing circuitry. The UE's processing circuitry may be configured to perform any step of the methods according to the first and second aspects of the present disclosure.

An eighteenth aspect of the present disclosure provides a method implemented in a communication system which may include a host computer, a network node and a UE. The method may comprise, at the host computer, receiving, from the network node, user data originating from a transmission which the network node has received from the UE. The network node may perform any step of the method according to the third aspect of the present disclosure.

A nineteenth aspect of the present disclosure provides a communication system which may include a host computer. The host computer may comprise a communication interface configured to receive user data originating from a transmission from a UE to a network node. The network node may comprise a radio interface and processing circuitry. The network node's processing circuitry may be configured to perform any step of the method according to the third aspect of the present disclosure.

A twentieth aspect of the present disclosure provides a computer-readable storage medium storing instructions which, when executed on at least one processor, cause the at least one processor to carry out any of the methods according to the first, second and third aspects of the disclosure.

A twenty-first aspect of the present disclosure provides a computer program product comprising instructions which, when executed on at least one processor, cause the at least one processor to carry out any of the methods according to the first, second and third aspects of the disclosure.

Embodiments herein afford many advantages, of which a non-exhaustive list of examples follows. In some embodiments herein, it can ensure that when one of a pair of terminal devices changes its link identifier (such as Layer-2 ID), the other one of the pair of terminal devices also changes its link identifier (such as Layer-2 ID). In some embodiments herein, the terminal devices can exchange their privacy policies during various procedures such as unicast link establishment, update, modification procedures, thus the terminal devices can decide what to do if their privacy policies do not match. In some embodiments herein, the privacy can be enhanced. A person skilled in the art will recognize additional features and advantages upon reading the following detailed description.

### BRIEF DESCRIPTION OF DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG.1 is a diagram illustrating a high level view of the non-roaming 5G system architecture for V2X communication over PC5 and Uu reference points according to an embodiment of the present disclosure;
FIG.2 is a block diagram of unicast mode communication over PC5 reference point according to an embodiment of the present disclosure;
FIG. 3 shows a flowchart of layer-2 link establishment procedure for unicast mode of V2X communication over PC5 reference point according to an embodiment of the present disclosure;
FIG. 4 shows a flowchart of link identifier update for a unicast link according to an embodiment of the present disclosure;
FIG. 5a shows a flowchart of a method according to an embodiment of the present disclosure;
FIG. 5b shows a flowchart of a method according to another embodiment of the present disclosure;
FIG. 6 shows a flowchart of a method according to another embodiment of the present disclosure;
FIG. 7 shows a flowchart of a method according to another embodiment of the present disclosure;
FIG.8a is a block diagram showing an apparatus suitable for practicing some embodiments of the disclosure;
FIG.8b is a block diagram showing a first terminal device according to an embodiment of the disclosure;
FIG.8c is a block diagram showing a second terminal device according to an embodiment of the disclosure;
FIG.8d is a block diagram showing a policy provisioning entity according to an embodiment of the disclosure;
FIG. 9 is a schematic showing a wireless network in accordance with some embodiments;
FIG. 10 is a schematic showing a user equipment in accordance with some embodiments;
FIG. 11 is a schematic showing a virtualization environment in accordance with some embodiments;
FIG. 12 is a schematic showing a telecommunication network connected via an intermediate network to a host computer in accordance with some embodiments;
FIG. 13 is a schematic showing a host computer communicating via a base station with a user equipment over a partially wireless connection in accordance with some embodiments;
FIG. 14 is a schematic showing methods implemented in a communication system including a host computer, a base station and a user equipment in accordance with some embodiments;
FIG. 15 is a schematic showing methods implemented in a communication system including a host computer, a base station and a user equipment in accordance with some embodiments;
FIG. 16 is a schematic showing methods implemented in a communication system including a host computer, a base station and a user equipment in accordance with some embodiments; and
FIG. 17 is a schematic showing methods implemented in a communication system including a host computer, a base station and a user equipment in accordance with some embodiments.

### DETAILED DESCRIPTION

The embodiments of the present disclosure are described in detail with reference to the accompanying drawings. It should be understood that these embodiments are discussed only for the purpose of enabling those skilled persons in the art to better understand and thus implement the present disclosure, rather than suggesting any limitations on the scope of the present disclosure. Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the term "network" or "communication network" refers to a network following any suitable wireless communication standards. For example, the wireless communication standards may comprise new radio (NR), long term evolution (LTE), LTE-Advanced, wideband code division multiple access (WCDMA), highspeed packet access (HSPA), Code Division Multiple Access (CDMA), Time Division Multiple Address (TDMA), Frequency Division Multiple Access (FDMA), Orthogonal Frequency-Division Multiple Access (OFDMA), Single carrier frequency division multiple access (SC-FDMA) and other wireless networks. A CDMA network may implement a radio technology such as Universal Terrestrial Radio Access (UTRA), etc. UTRA includes WCDMA and other variants of CDMA. A TDMA network may implement a radio technology such as Global System for Mobile Communications (GSM). An OFDMA network may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDMA, Ad-hoc network, wireless sensor network, etc. In the following description, the terms "network" and "system" can be used interchangeably. Furthermore, the communications between two devices in the network may be performed according to any suitable communication protocols, including, but not limited to, the wireless communication protocols as defined by a standard organization such as 3rd generation partnership project (3GPP) or the wired communication protocols. For example, the wireless communication protocols may comprise the first generation (1G), 2G, 3G, 4G, 4.5G, 5G communication protocols, and/or any other protocols either currently known or to be developed in the future.

The term "entity" used herein refers to a network device or network node or network function or any other devices (physical or virtual) in a communication network.

The term "network function (NF)" refers to any suitable function which can be implemented in a network entity (physical or virtual) of a communication network. For example, the 5G system (5GS) may comprise a plurality of NFs such as AMF (Access and mobility Function), SMF (Session Management Function), AUSF (Authentication Service Function), UDM (Unified Data Management), PCF (Policy Control Function), AF (Application Function), NEF (Network Exposure Function), UPF (User plane Function) and NRF (Network Repository Function), RAN (radio access network), SCP (service communication proxy), etc. In other embodiments, the network function may comprise different types of NFs (such as PCRF (Policy and Charging Rules Function), etc.) for example depending on the specific network.

The term "terminal device" refers to any end device that can access a communication network and receive services therefrom. By way of example and not limitation, the terminal device refers to a mobile terminal, user equipment (UE), or other suitable devices. The UE may be, for example, a Subscriber Station (SS), a Portable Subscriber Station, a Mobile Station (MS), or an Access Terminal (AT). The terminal device may include, but not limited to, a portable computer, an image capture terminal device such as a digital camera, a gaming terminal device, a music storage and a playback appliance, a mobile phone, a cellular phone, a smart phone, a voice over IP (VoIP) phone, a wireless local loop phone, a tablet, a wearable device, a personal digital assistant (PDA), a portable computer, a desktop computer, a wearable terminal device, a vehicle-mounted wireless terminal device, a wireless endpoint, a mobile station, a laptop-embedded equipment (LEE), a laptop-mounted equipment (LME), a USB dongle, a smart device, a wireless customer-premises equipment (CPE) and the like. In the following description, the terms "terminal device", "terminal", "user equipment" and "UE" may be used interchangeably. As one example, a terminal device may represent a UE configured for communication in accordance with one or more communication standards promulgated by the 3GPP, such as 3GPP' LTE standard or NR standard. As used herein, a "user equipment" or "UE" may not necessarily have a "user" in the sense of a human user who owns and/or operates the relevant device. In some embodiments, a terminal device may be configured to transmit and/or receive information without direct human interaction. For instance, a terminal device may be designed to transmit information to a network on a predetermined schedule, when triggered by an internal or external event, or in response to requests from the communication network. Instead, a UE may represent a device that is intended for sale to, or operation by, a human user but that may not initially be associated with a specific human user.

As yet another example, in an Internet of Things (IoT) scenario, a terminal device may represent a machine or other device that performs monitoring and/or measurements, and transmits the results of such monitoring and/or measurements to another terminal device and/or network equipment. The terminal device may in this case be a machine-to-machine (M2M) device, which may in a 3GPP context be referred to as a machine-type communication (MTC) device. As one particular example, the terminal device may be a UE implementing the 3GPP narrow band internet of things (NB-IoT) standard. Particular examples of such machines or devices are sensors, metering devices such as power meters, industrial machinery, or home or personal appliances, for example refrigerators, televisions, personal wearables such as watches etc. In other scenarios, a terminal device may represent a vehicle or other equipment that is capable of monitoring and/or reporting on its operational status or other functions associated with its operation.

As used herein, a peer UE (or terminal device) may be a UE (or terminal device) which communicates with another UE (or terminal device) for example via PC5. For example, when a source UE (or terminal device) communicates with a target UE (or terminal device), the source UE (or terminal device) may be referred to as a peer UE (or terminal device) of the target UE (or terminal device) and the target UE (or terminal device) may be also referred to as a peer UE (or terminal device) of the source UE (or terminal device). In some embodiments, the terms "target UE (or terminal device)" and "peer UE (or terminal device)" may be used interchangeably.

As used herein, in some embodiments, the terms "source" and "initiating" may be used interchangeably. In some embodiments, the terms "target" and "destination" may be used interchangeably. In some embodiments, the terms "source", "initiating", "target", "peer", "destination" may be the same as the corresponding terms as used in 3GPP TS 23.287 V16.1.0.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

As used herein, the phrase "at least one of A and B" should be understood to mean "only A, only B, or both A and B." The phrase "A and/or B" should be understood to mean "only A, only B, or both A and B."

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

It is noted that these terms as used in this document are used only for ease of description and differentiation among nodes, devices or networks etc. With the development of the technology, other terms with the similar/same meanings may also be used.

In the following description and claims, unless defined otherwise, all technical and scientific terms used herein have the same meaning as commonly understood by one of ordinary skills in the art to which this disclosure belongs.

It is noted that some embodiments of the present disclosure are mainly described in relation to 5G or NR specifications being used as non-limiting examples for certain exemplary network configurations and system deployments. As such, the description of exemplary embodiments given herein specifically refers to terminology which is directly related thereto. Such terminology is only used in the context of the presented non-limiting examples and embodiments, and does naturally not limit the present disclosure in any way. Rather, any other system configuration or radio technologies may equally be utilized as long as exemplary embodiments described herein are applicable.

Wireless communication networks are widely deployed to provide various telecommunication services such as voice, video, data, messaging and broadcasts. To meet dramatically increasing network requirements on traffic capacity and data rates, one interesting option for communication technique development is to allow D2D such as vehicle-to-everything (V2X) communications to be implemented in a wireless communication network such as 4G/LTE or 5G/NR network. V2X communications may carry both non-safety and safety information, where each of the applications and services related to V2X communications may be associated with specific requirements sets, e.g., in terms of latency, reliability, data rates, etc.

V2X communications may take advantage of a network (NW) infrastructure, when available, but at least basic V2X connectivity needs to be possible even in case of lack of coverage. Many use cases may be defined for V2X communications, for example, vehicle-to-vehicle (V2V) communication, vehicle-to-pedestrian (V2P) communication, and vehicle-to-infrastructure/network (V2I/N) communication. Providing a 3GPP V2X interface may be economically advantageous because of the 3GPP economies of scale and it may enable tighter integration between communications with the NW infrastructure (V2I), pedestrian (V2P) and other vehicles (V2V), as compared to using a dedicated V2X technology. Direct unicast (i.e. one-to-one) and/or multicast (i.e. one-to-many) transmissions over SL may be needed in some use cases such as platooning, cooperative driving, dynamic ride sharing, etc.

As used herein, D2D is referred to in a broader sense to include communications between any type of UEs, and includes V2X communications between a vehicle UE and any other type of UE. D2D such as V2X may be a component of many existing wireless technologies when it comes to direct communication between wireless devices. D2D such as V2X communications as an underlay to cellular networks may be proposed as an approach to take advantage of the proximity of devices.

Although various embodiments are explained in the context of D2D communications, some embodiments can also be used for other types of direct communications, including V2X and other SL (such as PC5 SL) communications. Accordingly, the term "V2X" herein can be replaced with the term "D2D" for some exemplary embodiments. Moreover, throughout the disclosure, although some embodiments are described in the context of NR, they may be used in other wireless systems, including systems that operate according to 4G standards, also referred to as LTE, or future radio technologies and standards.

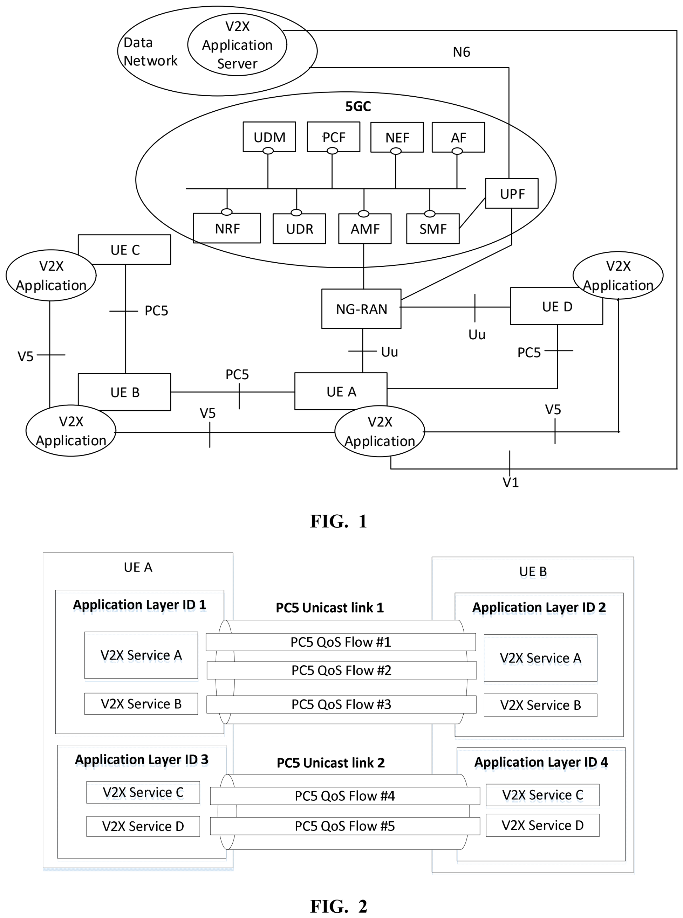

FIG.1 is a diagram illustrating a high level view of the non-roaming 5G system architecture for V2X communication over PC5 and Uu reference points according to an embodiment of the present disclosure. Various embodiments of the present disclosure are described without limitation in the context of a communication system as illustrated in the diagram of FIG.1. For simplicity, the system architecture of FIG.1 only depicts some exemplary elements. In practice, a communication system may further include any additional elements suitable to support communication between terminal devices or between a wireless device and another communication device, such as a landline telephone, a service provider, or any other network node or terminal device. The communication system may provide communication and various types of services to one or more terminal devices to facilitate the terminal devices' access to and/or use of the services provided by, or via, the communication system.

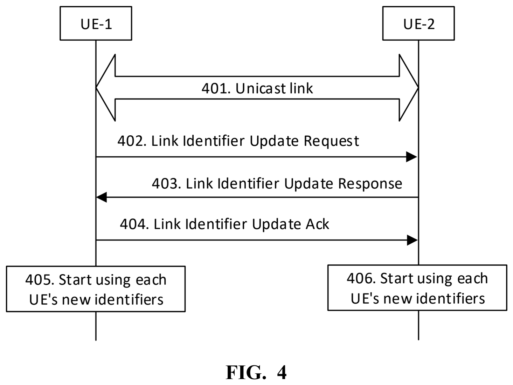

As shown in FIG.1, the system architecture may comprise 5GC (5G core network) including UDM, PCF, NEF, AF, UDR, AMF, SMF, UPF, etc. The system architecture may further comprise NG-RAN (next generation RAN), UE A, UE B, UE C, UE D, and V2X Application Server located in a data network. A V2X application may be installed in each UE. FIG.1 also shows some reference points such as N6: a reference point between the UPF and a Data Network, V5: a reference point between the V2X applications in the UEs, PC5: a reference point between the UEs, and it includes the LTE based PC5 and/or NR based PC5, V1: a reference point between the V2X applications in the UE and in the V2X Application Server, and Uu: a reference point between the UE and the NG-RAN. The network elements and reference points as shown in FIG.1 may be the same as Figure 4.2.1.1-1 of 3GPP TS 23.287 V16.1.0, the disclosure of which is incorporated by reference herein in its entirety.

Such system architecture of FIG.1 may include both short-range and long-range V2X service transmissions. In particular, short-range communication may involve transmissions over the D2D link, also defined as SL or PC5 interface in 3GPP, towards other vehicular UEs or roadside units (RSUs). On the other hand, for long-range transmission, it is intended for the transmission over the Uu interface between a UE (e.g., a smart phone, a vehicle device, etc.) and a base station.

FIG.2 is a block diagram of unicast mode communication over PC5 reference point according to an embodiment of the present disclosure. As shown in FIG.2, between the same UE pair, there can be multiple PC5 unicast links and each link can support multiple PC5 QoS flows as illustrated in FIG.2. Please note that one of the two UEs in a pair of UEs may be called a 'peer UE' for the other.

The following principles apply when the V2X communication is carried over PC5 unicast link:
- A PC5 unicast link between two UEs allows V2X communication between one or more pairs of peer V2X services in these UEs. All V2X services in the UE using the same PC5 unicast link use the same Application Layer ID.
   An Application Layer ID may change in time as described in clauses 5.6.1.1 and 6.3.3.2 of 3GPP TS 23.287 V16.1.0, due to privacy. This does not cause a reestablishment of a PC5 unicast link.
- One PC5 unicast link supports one or more V2X services (e.g. PSIDs (Provider Service Identifiers) or ITS-AIDs (ITS (Intelligent Transport Systems) Application Identifiers)) if these V2X services are at least associated with the pair of peer Application Layer IDs for this PC5 unicast link. For example, as illustrated in FIG.2, UE A and UE B have two PC5 unicast links, one between peer Application Layer ID 1/UE A and Application Layer ID 2/UE B and one between peer Application Layer ID 3/UE A and Application Layer ID 4/UE B.
   A source UE (or initiating UE) is not required to know whether different target Application Layer IDs over different PC5 unicast links belong to the same target UE.
- A PC5 unicast link supports V2X communication using a single network layer protocol e.g. IP (Internet protocol) or non-IP.
- A PC5 unicast link supports per-flow QoS model as specified in clause 5.4.1 of 3GPP TS 23.287 V16.1.0.

When the Application layer in the UE initiates data transfer for a V2X service which requires unicast mode of communication over PC5 reference point:
- the UE shall reuse an existing PC5 unicast link if the pair of peer Application Layer IDs and the network layer protocol of this PC5 unicast link are identical to those required by the application layer in the UE for this V2X service, and modify the existing PC5 unicast link to add this V2X service as specified in clause 6.3.3.4 of 3GPP TS 23.287 V16.1.0; otherwise
- the UE shall trigger the establishment of a new PC5 unicast link as specified in clause 6.3.3.1 of 3GPP TS 23.287 V16.1.0.

After successful PC5 unicast link establishment, UE A and UE B use the same pair of Layer-2 IDs for subsequent PC5-S signaling message exchange and V2X service data transmission as specified in clause 5.6.1.4 of 3GPP TS 23.287 V16.1.0. The V2X layer of the transmitting UE indicates to the AS (Access Stratum) layer whether a transmission is for a PC5-S signaling message (i.e. Direct Communication Request/Accept, Link Identifier Update Request/Response/Ack (acknowledge), Disconnect Request/Response, Link Modification Request/Accept) or V2X service data.

For every PC5 unicast link, a UE self-assigns a distinct PC5 Link Identifier that uniquely identifies the PC5 unicast link in the UE for the lifetime of the PC5 unicast link. Each PC5 unicast link is associated with a Unicast Link Profile which includes:
- service type(s) (e.g. PSID or ITS-AID), Application Layer ID and Layer-2 ID of UE A; and
- Application Layer ID and Layer-2 ID of UE B; and
- network layer protocol used on the PC5 unicast link; and
- for each V2X service, a set of PC5 QoS Flow Identifier(s) (PFI(s)). Each PFI is associated with QoS parameters (i.e. PQI and optionally Range).

For privacy reason, the Application Layer IDs and Layer-2 IDs may change as described in clauses 5.6.1.1 and 6.3.3.2 of 3GPP TS 23.287 V16.1.0 during the lifetime of the PC5 unicast link and, if so, shall be updated in the Unicast Link Profile accordingly. The UE uses PC5 Link Identifier to indicate the PC5 unicast link to V2X Application layer, therefore V2X Application layer identifies the corresponding PC5 unicast link even if there are more than one unicast link associated with one service type (e.g. the UE establishes multiple unicast links with multiple UEs for a same service type).

The Unicast Link Profile shall be updated accordingly after a Layer-2 link modification for an established PC5 unicast link as specified in clause 6.3.3.4 of 3GPP TS 23.287 V16.1.0.

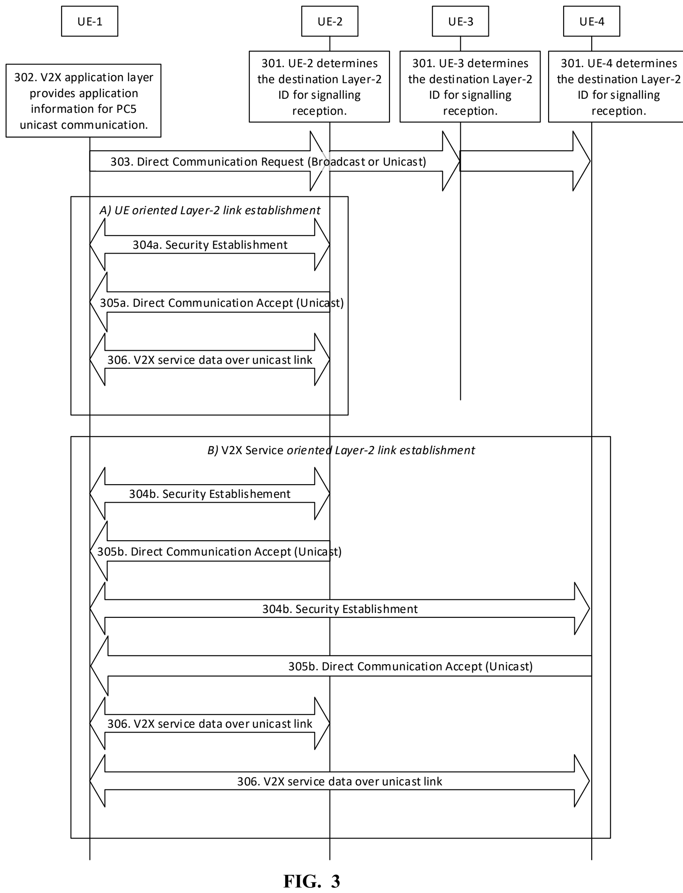

FIG. 3 shows a flowchart of layer-2 link establishment procedure for unicast mode of V2X communication over PC5 reference point according to an embodiment of the present disclosure. To perform unicast mode of V2X communication over PC5 reference point, the UE is configured with the related information as described in clause 5.1.2.1 of 3GPP TS 23.287 V16.1.0. The messages as shown in FIG.3 are similar to the corresponding messages as described in clause 6.3.3.1 of 3GPP TS 23.287 V16.1.0.

At step 301, the UE(s) determine the destination Layer-2 ID for signaling reception for PC5 unicast link establishment as specified in clause 5.6.1.4 of 3GPP TS 23.287 V16.1.0. The destination Layer-2 ID is configured with the UE(s) as specified in clause 5.1.2.1 of 3GPP TS 23.287 V16.1.0.

At step 302, the V2X application layer in UE-1 provides application information for PC5 unicast communication. The application information includes the V2X service type(s) (e.g. PSID(s) or ITS-AID(s)) of the V2X application and the initiating UE's Application Layer ID. The target UE's Application Layer ID may be included in the application information. The V2X application layer in UE-1 may provide V2X Application Requirements for this unicast communication. UE-1 determines the PC5 QoS parameters and PFI as specified in clause 5.4.1.4 of 3GPP TS 23.287 V16.1.0. If UE-1 decides to reuse the existing PC5 unicast link as specified in clause 5.2.1.4 of 3GPP TS 23.287 V16.1.0, the UE triggers Layer-2 link modification procedure as specified in clause 6.3.3.4 of 3GPP TS 23.287 V16.1.0.

At step 303, UE-1 sends a Direct Communication Request message to initiate the unicast layer-2 link establishment procedure. The Direct Communication Request message includes:
- Source User Info: the initiating UE's Application Layer ID (i.e. UE-1's Application Layer ID).
- If the V2X application layer provided the target UE's Application Layer ID in step 2, the following information is included:
- Target User Info: the target UE's Application Layer ID (i.e. UE-2's Application Layer ID).
- V2X Service Info: the information about V2X Service(s) requesting Layer-2 link establishment (e.g. PSID(s) or ITS-AID(s)).
- Security Information: the information for the establishment of security.

The source Layer-2 ID and destination Layer-2 ID used to send the Direct Communication Request message are determined as specified in clauses 5.6.1.1 and 5.6.1.4 of 3GPP TS 23.287 V16.1.0. The destination Layer-2 ID may be broadcast or unicast Layer-2 ID. When unicast Layer-2 ID is used, the Target User Info shall be included in the Direct Communication Request message.

UE-1 sends the Direct Communication Request message via PC5 broadcast or unicast using the source Layer-2 ID and the destination Layer-2 ID.

At step 304, Security with UE-1 is established as below:
- 304a. If the Target User Info is included in the Direct Communication Request message, the target UE, i.e. UE-2, responds by establishing the security with UE-1.
- 304b. If the Target User Info is not included in the Direct Communication Request message, the UEs that are interested in using the announced V2X Service(s) over a PC5 unicast link with UE-1 responds by establishing the security with UE-1.

When the security protection is enabled, UE-1 sends the following information to the target UE:
- If IP communication is used:
- IP Address Configuration: For IP communication, IP address configuration is required for this link and indicates one of the following values:
- "IPv6 Router" if IPv6 address allocation mechanism is supported by the initiating UE, i.e., acting as an IPv6 Router; or
- "IPv6 address allocation not supported" if IPv6 address allocation mechanism is not supported by the initiating UE.
- Link Local IPv6 Address: a link-local IPv6 address formed locally based on RFC (Request For Comments) 4862 if UE-1 does not support the IPv6 IP address allocation mechanism, i.e. the IP Address Configuration indicates "IPv6 address allocation not supported".
- QoS Info: the information about PC5 QoS Flow(s). For each PC5 QoS Flow, the PFI and the corresponding PC5 QoS parameters (i.e. PQI (PC5 5QI (5G QoS Identifier)) and conditionally other parameters such as MFBR (Maximum Flow Bit Rate)/GFBR (Guaranteed Flow Bit Rate), etc.).

At step 305, a Direct Communication Accept message is sent to UE-1 by the target UE(s) that has successfully established security with UE-1:
- 305a. (UE oriented Layer-2 link establishment) If the Target User Info is included in the Direct Communication Request message, the target UE, i.e. UE-2 responds with a Direct Communication Accept message if the Application Layer ID for UE-2 matches.
- 305b. (V2X Service oriented Layer-2 link establishment) If the Target User Info is not included in the Direct Communication Request message, the UEs that are interested in using the announced V2X Service(s) respond to the request by sending a Direct Communication Accept message (UE-2 and UE-4).

The Direct Communication Accept message includes:
- Source User Info: Application Layer ID of the UE sending the Direct Communication Accept message.
- QoS Info: the information about PC5 QoS Flow(s). For each PC5 QoS Flow, the PFI and the corresponding PC5 QoS parameters requested by UE-1 (i.e. PQI and conditionally other parameters such as MFBR/GFBR, etc).
- If IP communication is used:
- IP Address Configuration: For IP communication, IP address configuration is required for this link and indicates one of the following values:
- "IPv6 Router" if IPv6 address allocation mechanism is supported by the target UE, i.e., acting as an IPv6 Router; or
- "IPv6 address allocation not supported" if IPv6 address allocation mechanism is not supported by the target UE.
- Link Local IPv6 Address: a link-local IPv6 address formed locally based on RFC 4862 if the target UE does not support the IPv6 IP address allocation mechanism, i.e. the IP Address Configuration indicates "IPv6 address allocation not supported", and UE-1 included a link-local IPv6 address in the Direct Communication Request message. The target UE shall include a non-conflicting link-local IPv6 address.

If both UEs (i.e. the initiating UE (also called source UE) and the target UE, which may also be called the "peer UE" to each other) selected to use link-local IPv6 address, they shall disable the duplicate address detection defined in RFC 4862.

When either the initiating UE or the target UE indicates the support of IPv6 router, corresponding address configuration procedure would be carried out after the establishment of the layer 2 link, and the link-local IPv6 addresses are ignored.

The source Layer-2 ID used to send the Direct Communication Accept message is determined as specified in clauses 5.6.1.1 and 5.6.1.4 of 3GPP TS 23.287 V16.1.0. The destination Layer-2 ID is set to the source Layer-2 ID of the received Direct Communication Request message.

Upon receiving the Direct Communication Accept message from peer UE, UE-1 obtains the peer UE's Layer-2 ID for future communication, for signaling and data traffic for this unicast link.

The V2X layer of the UE that established PC5 unicast link passes the PC5 Link Identifier assigned for the unicast link and PC5 unicast link related information down to the AS layer. The PC5 unicast link related information includes Layer-2 ID information (i.e. source Layer-2 ID and destination Layer-2 ID). This enables the AS layer to maintain the PC5 Link Identifier together with the PC5 unicast link related information.

At step 306. V2X service data is transmitted over the established unicast link as below:
The PC5 Link Identifier and PFI are provided to the AS layer, together with the V2X service data.
UE-1 sends the V2X service data using the source Layer-2 ID (i.e. UE-1's Layer-2 ID for this unicast link) and the destination Layer-2 ID (i.e. the peer UE's Layer-2 ID for this unicast link).

PC5 unicast link is bi-directional, therefore the peer UE of UE-1 can send the V2X service data to UE-1 over the unicast link with UE-1.

FIG. 4 shows a flowchart of link identifier update for a unicast link according to an embodiment of the present disclosure. The messages as shown in FIG.4 are same or similar as the corresponding messages as described in clause 6.3.3.2 of 3GPP TS23.287 V16.1.0 and S2-2000953 in SA2#136AH, the disclosure of which is incorporated by reference herein in its entirety.

Due to the privacy requirements, identifiers used for unicast mode of V2X communication over PC5 reference point (e.g. Application Layer ID, Source Layer-2 ID and IP address/prefix) shall be changed over time as specified in clauses 5.6.1.1 and 5.6.1.4 of 3GPP TS 23.287 V16.1.0. The procedure of FIG.4 is used to update and exchange new identifiers between the source and the peer UEs for a unicast link before using the new identifiers, to prevent service interruptions. If a UE has multiple unicast links using the same Application Layer IDs or Layer-2 IDs, the UE needs to perform the link identifier update procedure over each of the unicast link.

At step 401, UE-1 and UE-2 have a unicast link established as described in clause 6.3.3.1.

At step 402, UE-1 decides to change its identifier(s), e.g. due to the Application Layer ID change or upon expiry of a timer. UE-1 generates its new Layer-2 ID and send a Link Identifier Update Request message to UE-2 using the old identifiers. The Link Identifier Update Request message includes the new identifier(s) to use (including the new Layer-2 ID, Security Information, optionally the new Application Layer ID, and optionally new IP address/prefix if IP communication is used). The new identifier(s) should be cyphered to protect privacy. After sending the Link Identifier Update request, UE-1 keeps sending data traffic to UE-2 with the old identifiers until UE-1 sends the Link Identifier Update Ack to UE-2. The timer is running on per Source Layer-2 ID. When one of the two UEs acts as IPv6 router as described in clause 5.2.1.5 of 3GPP TS23.287 V16.1.0 and IP address/prefix also need to be changed, corresponding address configuration procedure would be carried out after the Link Identifier update procedure.

At step 403, upon reception of the Link Identifier Update Request message, based on privacy configuration as specified in clause 5.1.2.1 of 3GPP TS23.287 V16.1.0, UE-2 may also decide to change its identifier(s). If UE-2 decides to change its identifier(s), UE-2 responds with a Link Identifier Update Response message which includes the new identifier(s) to use (including the new Layer-2 ID, Security Information, optionally the new Application Layer ID, and optionally a new IP address/prefix if IP communication is used). The new identifier(s) should be cyphered to protect privacy. The Link Identifier Update Response message is sent using the old identifiers. UE-2 continues to receive traffic with the old Layer-2 ID from UE-1 until UE-2 receives traffic with the new Layer-2 ID from UE-1.After sending the Link Identifier Update response, UE-2 keeps sending data traffic to UE-1 with the old identifier until UE-2 receives the Link Identifier Update Ack message from UE-1.

At step 404, upon reception of the Link Identifier Update Response message, UE-1 responds with a Link Identifier Update Ack message which includes the new identifier(s) from UE-2, as received on the Link Identifier Update Response message. The Link Identifier Update Ack message is sent using the old identifiers. UE-1 continues to receive traffic with the old Layer-2 ID from UE-2 until UE-1 receives traffic with the new Layer-2 ID from UE-2.

At step 405, the V2X layer of UE-1 passes the PC5 Link Identifier for the unicast link and the updated Layer-2 IDs (i.e. new Layer-2 ID for UE-1 for the source and new Layer-2 ID of UE-2 for the destination) down to the AS layer. This enables the AS layer to update the provided Layer-2 IDs for the unicast link. UE-1 starts using its new identifiers and UE-2's new identifiers for this unicast link.

At step 406, the V2X layer of UE-2 passes the PC5 Link Identifier for the unicast link and the updated Layer-2 IDs (i.e. new Layer-2 ID of UE-2 for the source and new Layer-2 ID for UE-1 for the destination) down to the AS layer. This enables the AS layer to update the provided Layer-2 IDs for the unicast link. UE-2 starts using its new identifiers and UE-1's new identifiers for this unicast link. The Security Information in the above messages also needs to be updated at the same time as the Layer-2 IDs.

To fullfill the privacy requirement, it is required that both UEs (i.e. a source UE and a target UE, which may be called a "peer UE" to each other) changes the Layer2 ID at the same time in some senarions. The existing solution as shown in FIG.4 may allow the target UE to change the link identifier together with the source UE, however it is not conpulsory. If the target UE does not change its link identifier, then it will violate the privacy policy of the source UE. For example, as decribed in step 403 of FIG.4, upon reception of the Link Identifier Update Request message, based on privacy configuration as specified in clause 5.1.2.1 of 3GPP TS23.287 V16.1.0, UE-2 may also decide to change its identifier(s). However the privacy configuration does not include any policy of whether a peer UE is required to change its Layer-2 ID when a source UE changes its layer2-ID.

To overcome or mitigate the above mentioned problem or other problems, some embodiments of the present disclosure propose a solution that the terminal devices such as UEs can exchange their privacy policy for example during various procedures such as unicast link establishment, update, modification procedures, thus the terminal devices can decide what to do if their privacy policies do not match.

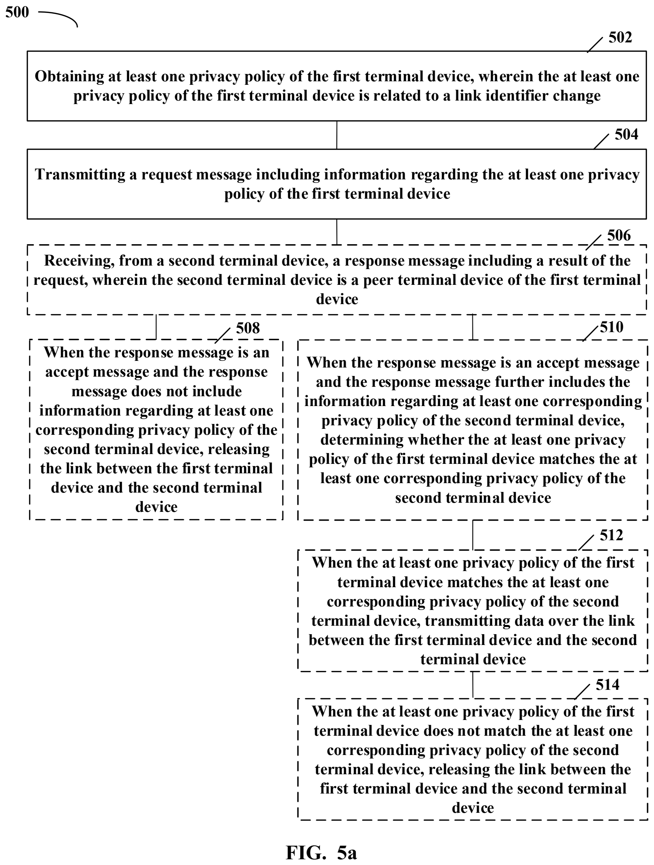

FIG. 5a shows a flowchart of a method according to an embodiment of the present disclosure, which may be performed by an apparatus implemented in/as a first terminal device or communicatively coupled to the first terminal device. As such, the apparatus may provide means or modules for accomplishing various parts of the method 500 as well as means or modules for accomplishing other processes in conjunction with other components.

At block 502, the first terminal device may obtain at least one privacy policy of the first terminal device. The at least one privacy policy of the first terminal device is related to a link identifier change.

The link may be any suitable link which can be established between the first terminal device and a peer terminal device such as a second terminal device. For example, the link may be a D2D link, a sidelink, a PC5 link, etc. In an embodiment, the link may be a PC5 unicast link.

The link identifier may be any suitable link identifier for example which can be used to identify the terminal device. In an embodiment, the link identifier may be a layer-2 identifier. For example, layer-2 may refer to the second layer of the Open Systems Interconnection (OSI) Model, which is the data link layer. In an embodiment, the layer-2 identifier may be Layer-2 ID as described in 3GPP TS23.287 V16.1.0.

The at least one privacy policy of the first terminal device may comprise any suitable policy(s) related to the link identifier change. In an embodiment, the at least one privacy policy of the first terminal device may comprise a policy of whether a peer terminal device is required to change the link identifier of the peer terminal device when the first terminal device changes the link identifier of the first terminal device. In another embodiment, the at least one privacy policy of the first terminal device may comprise a privacy timer value indicating the duration after which the first terminal device shall change each source link identifier self-assigned by the first terminal device when privacy is required. For example, a privacy policy may be a policy of a peer terminal device is required to change the link identifier of the peer terminal device when the first terminal device changes the link identifier of the first terminal device. A privacy policy may be a policy of a peer terminal device is not required to change the link identifier of the peer terminal device when the first terminal device changes the link identifier of the first terminal device. A privacy policy may be a policy of a peer terminal device is required to change the link identifier of the peer terminal device after receiving a link identifier update request message from the first terminal device. In addition the privacy policy may be added with any other suitable condition(s) such as geographical area(s), etc. A privacy policy may be a policy of a privacy timer value indicating the duration after which the UE shall change each source Layer-2 ID self-assigned by the UE when privacy is required. A privacy policy may be a policy of whether require the peer UE to change its Layer-2 ID at the same time when the source UE changes its layer2-ID.

The first terminal device may obtain the at least one privacy policy of the first terminal device in various ways. For example, the at least one privacy policy may be configured in the UICC (Universal Integrated Circuit Card); or pre-configured in the terminal device; or preconfigured in the terminal device and configured in the UICC; or provided/updated by a server such as the V2X Application Server via PCF and/or V1 reference point; or provided/updated by the PCF to the terminal device. If the same set(s) of privacy policy are provided by different sources, the first terminal device may consider them in the following priority order:
- provided/updated by the PCF;
- provided/updated by the server such as V2X Application Server via V1 reference point;
- configured in the UICC;
- pre-configured in the terminal device.

In an embodiment, the first terminal device may obtain the at least one privacy policy of the first terminal device from at least one of a network node, a server and the first terminal device.

In embodiment, the server may be an application server such as V2X Application Server.

In an embodiment, the network node may be a policy control function entity such as PCF.

At block 504, the first terminal device may transmit a request message including information regarding the at least one privacy policy of the first terminal device. The information regarding the at least one privacy policy of the first terminal device may take any suitable forms such as an indication, a bitmap, etc. The request message may be any suitable request message.

In an embodiment, the information regarding the at least one privacy policy of the first terminal device may include at least one of privacy information: privacy timer of changing Layer-2 IDs and if it requires the peer UE to change the Layer2-ID at the same time when the source UE changes its layer2-ID.

In an embodiment, the information regarding the at least one privacy policy of the first terminal device may comprise an indication of the at least one privacy policy of the first terminal device. For example, the information regarding the policy of whether a peer terminal device is required to change the link identifier of the peer terminal device when the first terminal device changes the link identifier of the first terminal device may be represented by at least one bit. When there are multiple privacy policies, the multiple privacy policies may be represented by a bitmap.

In an embodiment, the indication of the at least one privacy policy of the first terminal device may be a Boolean value. For example, a bit "1" may be used to indicate the policy of a peer terminal device is required to change the link identifier of the peer terminal device when the first terminal device changes the link identifier of the first terminal device, and a bit "0" may be used to indicate the policy of a peer terminal device is not required to change the link identifier of the peer terminal device when the first terminal device changes the link identifier of the first terminal device.

In an embodiment, the request message may comprise at least one of a link establishment request message; a link identifier update request message; and a link modification request message. For example, the link establishment request message, the link identifier update request message and the link modification request message may be the Direct Communication Request message, the Link Identifier Update Request message and the Link Modification Request message respectively as described in 3GPP TS23.287 V16.1.0 except that they may further include information regarding the at least one privacy policy of the first terminal device.

In an embodiment, the request message may be transmitted via broadcast or unicast. For example, when the request message is the Direct Communication Request message, the request message may be transmitted via broadcast or unicast as described in 3GPP TS23.287 V16.1.0. When the request message is the Link Identifier Update Request message, the request message may be transmitted via unicast as described in 3GPP TS23.287 V16.1.0. When the request message is the Link Modification Request message, the request message may be transmitted via unicast as described in 3GPP TS23.287 V16.1.0.

At block 506 (optionally), the first terminal device may receive, from a second terminal device, a response message including a result of the request. The second terminal device is a peer terminal device of the first terminal device. A peer terminal device may be a terminal device which communicates with another terminal device for example via PC5. For example, the second terminal device is a peer terminal device of the first terminal device and the first terminal device is a peer terminal device of the second terminal device. The response message may be any suitable response message. The response message may include at least one of the link establishment response message, the link identifier update response message and the link modification response message. For example, the link establishment response message, the link identifier update response message and the link modification response message may be the Direct Communication Accept message, the Link Identifier Update response message and the Link Modification Accept message respectively as described in 3GPP TS23.287 V16.1.0.

In an embodiment, the response message may be a reject message when the at least one privacy policy of the first terminal device does not match at least one corresponding privacy policy of the second terminal device. For example, when the privacy policy of the first terminal device requires the peer terminal device to change its link ID such as layer2-ID when the first terminal device changes its link ID such as layer2-ID and the privacy policy of the second terminal device does not include the same privacy policy or any privacy policy related to the link identifier change, in this case the privacy policy of the first terminal device does not match the corresponding privacy policy of the second terminal device.

In an embodiment, the response message is an accept message when the at least one privacy policy of the first terminal device matches the at least one corresponding privacy policy of the second terminal device. For example, when the privacy policies of the first terminal device and the second terminal device are the same policy that the peer terminal device is required to change its link ID such as layer2-ID when the first terminal device and the second terminal device changes its link ID such as layer2-IDs, in this case the privacy policy of the first terminal device matches the corresponding privacy policy of the second terminal device.

At block 508 (optionally), when the response message is an accept message and when the response message does not include information regarding at least one corresponding privacy policy of the second terminal device, the first terminal device may release the link between the first terminal device and the second terminal device. The information regarding at least one corresponding privacy policy of the second terminal device may be similar to the information regarding at least one privacy policy of the first terminal device as described above.

At block 510 (optionally), when the response message further includes information regarding at least one corresponding privacy policy of the second terminal device, the first terminal device may determine whether the at least one privacy policy of the first terminal device matches the at least one corresponding privacy policy of the second terminal device. The matching operation may be similar to the match operation as described above.

At block 512 (optionally), when the at least one privacy policy of the first terminal device matches the at least one corresponding privacy policy of the second terminal device, the first terminal device may transmit data over the link between the first terminal device and the second terminal device.

At block 514 (optionally), when the at least one privacy policy of the first terminal device does not match the at least one corresponding privacy policy of the second terminal device, the first terminal device may release the link between the first terminal device and the second terminal device.

In an embodiment, the information regarding at least one corresponding privacy policy of the second terminal device may comprise an indication of the at least one corresponding privacy policy of the second terminal device. The indication of the at least one corresponding privacy policy of the second terminal device may be similar to the indication of the at least one privacy policy of the first terminal device as described above.

In an embodiment, the indication of the at least one corresponding privacy policy of the second terminal device may be a Boolean value.

In an embodiment, when the request message is transmitted via broadcast, the second terminal device may use (or be interested in using) at least one announced service over a unicast link with the first terminal device. For example, the request message may be the Direct Communication Request message which may be transmitted via broadcast, when the second terminal device is interested in using at least one announced service over a unicast link with the first terminal device, the second terminal device may send the Direct Communication Accept message to the first terminal device. In addition the Direct Communication Accept message may further include information regarding at least one corresponding privacy policy of the second terminal device.

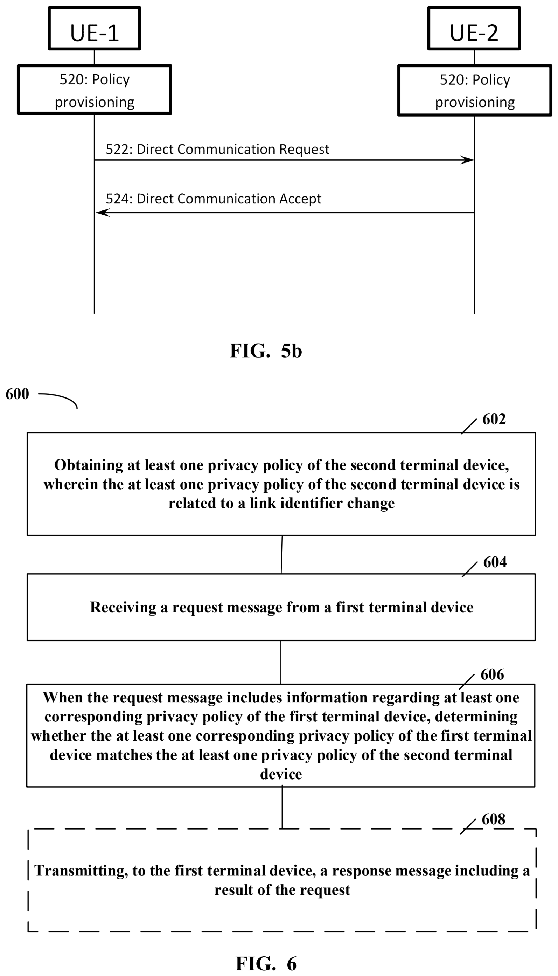

FIG. 5b shows a flowchart of a method according to another embodiment of the present disclosure.

As shown in FIG.5b, at step 520, authorization and policy provisioning for communications over the PC5 reference point may be done according to clause 5.1.2.1 of 3GPP TS 23.287 V16.1.0. In addition to the policies and parameters already defined in 3GPP TS 23.287 V16.1.0, the following parameter may be provisioned:
- Policy of whether require the peer UE to change its Layer-2 ID at the same time when the source UE changes its layer2-ID.

In steps 522 and 524, the source UE and target UE may do the unicast link establishment procedure. In addition to the parameters defined in 3GPP TS 23.287 V16.1.0 for Direct Communication Request and Accept messages, the following parameter may be added into the messages:
- Indication of if it requires the peer UE to change the Layer2-ID at the same time when it changes its own Layer2-ID. The indication could be a Boolean value.

When receiving the privacy policy from UE-1 in step 522, UE-2 may check if their privacy policies match, if not, then UE-2 may send communication reject message to UE-1. Similarly, when UE-1 receives the privacy policy from UE-2 in step 524, it may check if their privacy policies match, if not, then UE-1 may stop the procedure of establishing unicast link with UE-2.

FIG. 6 shows a flowchart of a method according to another embodiment of the present disclosure, which may be performed by an apparatus implemented in/as a second terminal device or communicatively coupled to the second terminal device. As such, the apparatus may provide means or modules for accomplishing various parts of the method 600 as well as means or modules for accomplishing other processes in conjunction with other components. For some parts which have been described in the above embodiments, detailed description thereof is omitted here for brevity.

At block 602, the second terminal device may obtain at least one privacy policy of the second terminal device. The at least one privacy policy of the second terminal device is related to a link identifier change. The at least one privacy policy of the second terminal device may be similar to the at least one privacy policy of the first terminal device. The second terminal device may obtain the at least one privacy policy of the second terminal device in various ways for example as described above. In an embodiment, the link identifier may be a layer-2 identifier. In an embodiment, the link may be a PC5 unicast link.

In an embodiment, the second terminal device may obtain the at least one privacy policy of the second terminal device from at least one of a network node, a server, from the second terminal device.

In embodiment, the server may be an application server such as V2X Application Server.

In an embodiment, the network node may be a policy control function entity such as PCF.

At block 604, the second terminal device may receive a request message from a first terminal device. The request message may be any suitable request message. For example, the request message may comprise at least one of a link establishment request message; a link identifier update request message; and a link modification request message. For example, the link establishment request message, the link identifier update request message and the link modification request message may be the Direct Communication Request message, the Link Identifier Update Request message and the Link Modification Request message respectively as described in 3GPP TS23.287 V16.1.0. In an embodiment, the request message may be sent by the first terminal device as described in block 504 of FIG.5a.

At block 606, when the request message includes information regarding at least one corresponding privacy policy of the first terminal device, the second terminal device may determine whether the at least one corresponding privacy policy of the first terminal device matches the at least one privacy policy of the second terminal device.

In an embodiment, the at least one corresponding privacy policy of the first terminal device may comprise a policy of whether a peer terminal device is required to change the link identifier of the peer terminal device when the first terminal device changes the link identifier of the first terminal device; and
In an embodiment, the at least one privacy policy of the second terminal device may comprise a policy of whether a peer terminal device is required to change the link identifier of the peer terminal device when the second terminal device changes the link identifier of the second terminal device.

In an embodiment, the information regarding the at least one corresponding privacy policy of the first terminal device comprises an indication of the at least one corresponding privacy policy of the first terminal device.

In an embodiment, the indication of the at least one corresponding privacy policy of the first terminal device is a Boolean value.

At block 608 (optionally), the second terminal device may transmit, to the first terminal device, a response message including a result of the request.

In an embodiment, the response message may be a reject message when the at least one corresponding privacy policy of the first terminal device does not match the at least one privacy policy of the second terminal device or when the request message does not include information regarding at least one corresponding privacy policy of the first terminal device.

In an embodiment, the response message may be an accept message when the at least one corresponding privacy policy of the first terminal device matches the at least one privacy policy of the second terminal device.

In an embodiment, when the response message is an accept message, the response message may further include information regarding the at least one privacy policy of the second terminal device.

In an embodiment, the information regarding the at least one privacy policy of the second terminal device may comprise an indication of the at least one privacy policy of the second terminal device.

In an embodiment, the indication of the at least one privacy policy of the second terminal device may be a Boolean value.

In an embodiment, the request message may be received via broadcast or unicast.

In an embodiment, when the request message is received via broadcast, the second terminal device uses at least one announced service over a unicast link with the first terminal device.

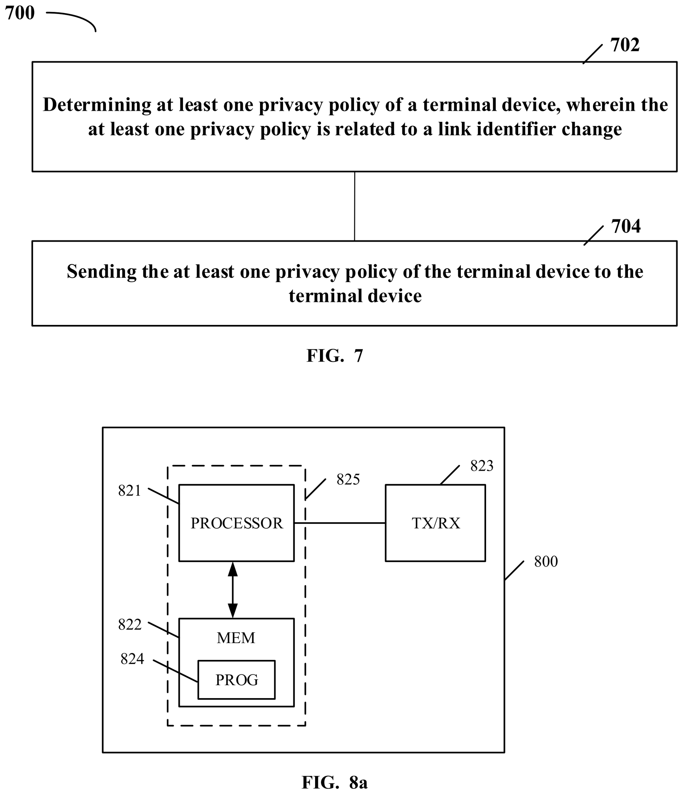

FIG. 7 shows a flowchart of a method according to another embodiment of the present disclosure, which may be performed by an apparatus implemented in/as a policy provisioning entity or communicatively coupled to the policy provisioning entity. As such, the apparatus may provide means or modules for accomplishing various parts of the method 700 as well as means or modules for accomplishing other processes in conjunction with other components. For some parts which have been described in the above embodiments, detailed description thereof is omitted here for brevity.

At block 702, the policy provisioning entity may determine at least one privacy policy of a terminal device. The at least one privacy policy is related to a link identifier change. For example the policy provisioning entity may determine at least one privacy policy of the first terminal device and/or the second terminal device. The policy provisioning entity may determine the at least one privacy policy of the terminal device in various ways. For example, the at least one privacy policy of the terminal device may be preconfigured in the policy provisioning entity. The policy provisioning entity may obtain the at least one privacy policy of the terminal device from another device. The link identifier may be a layer-2 identifier. The link may be a PC5 unicast link.

At block 704, the policy provisioning entity may send the at least one privacy policy of the terminal device to the terminal device.

In an embodiment, the at least one privacy policy of the terminal device may comprise a policy of whether a peer terminal device is required to change the link identifier of the peer terminal device when the terminal device changes the link identifier of the terminal device.

In an embodiment, the policy provisioning entity comprises at least one of a network node, a server and the policy provisioning entity in the terminal device.

In embodiment, the server may be an application server such as V2X Application Server.

In an embodiment, the network node may be a policy control function entity such as PCF.

In an embodiment, the following underline content may be added into clause 5.1.2.1 of 3GPP TS 23.287 V16.1.0:

### Policy/parameters related to privacy:

- The list of V2X services, e.g. PSIDs or ITS-AIDs of the V2X applications, with Geographical Area(s) that require privacy support.
- A privacy timer value indicating the duration after which the UE shall change each source Layer-2 ID self-assigned by the UE when privacy is required.
- Policy of whether require the peer UE to change its Layer-2 ID at the same time when the source UE changes its layer2-ID.

In an embodiment, the following underline content may be added into clause 6.3.3.1 of 3GPP TS 23.287 V16.1.0:
The Direct Communication Request message includes:
- Source User Info: the initiating UE's Application Layer ID (i.e. UE-1's Application Layer ID).
- If the V2X application layer provided the target UE's Application Layer ID in step 2, the following information is included:
   - Target User Info: the target UE's Application Layer ID (i.e. UE-2's Application Layer ID).
- V2X Service Info: the information about V2X Service(s) requesting Layer-2 link establishment (e.g. PSID(s) or ITS-AID(s)).
- Security Information: the information for the establishment of security.
- Privacy Information (optional): privacy timer of changing Layer-2 IDs and if it requires the peer UE to change the Layer2-ID at the same time as described in clause 5.1.2.1.

FIG.8a is a block diagram showing an apparatus suitable for practicing some embodiments of the disclosure. For example, any one of the first terminal device, the second terminal device and the policy provisioning entity described above may be implemented as or through the apparatus 800.

The apparatus 800 comprises at least one processor 821, such as a DP, and at least one MEM 822 coupled to the processor 821. The apparatus 820 may further comprise a transmitter TX and receiver RX 823 coupled to the processor 821. The MEM 822 stores a PROG 824. The PROG 824 may include instructions that, when executed on the associated processor 821, enable the apparatus 820 to operate in accordance with the embodiments of the present disclosure. A combination of the at least one processor 821 and the at least one MEM 822 may form processing means 825 adapted to implement various embodiments of the present disclosure.

Various embodiments of the present disclosure may be implemented by computer program executable by one or more of the processor 821, software, firmware, hardware or in a combination thereof.

The MEM 822 may be of any type suitable to the local technical environment and may be implemented using any suitable data storage technology, such as semiconductor based memory devices, magnetic memory devices and systems, optical memory devices and systems, fixed memories and removable memories, as non-limiting examples.

The processor 821 may be of any type suitable to the local technical environment, and may include one or more of general purpose computers, special purpose computers, microprocessors, digital signal processors (DSPs) and processors based on multicore processor architecture, as non-limiting examples.

In an embodiment where the apparatus is implemented as or at the first terminal device, the memory 822 contains instructions executable by the processor 821, whereby the first terminal device operates according to the method 500 as described in reference to FIG.5a.

In an embodiment where the apparatus is implemented as or at the second terminal device, the memory 822 contains instructions executable by the processor 821, whereby the second terminal device operates according to the method 600 as described in reference to FIG.6.

In an embodiment where the apparatus is implemented as or at the policy provisioning entity, the memory 822 contains instructions executable by the processor 821, whereby the policy provisioning entity operates according to the method 700 as described in reference to FIG.7.

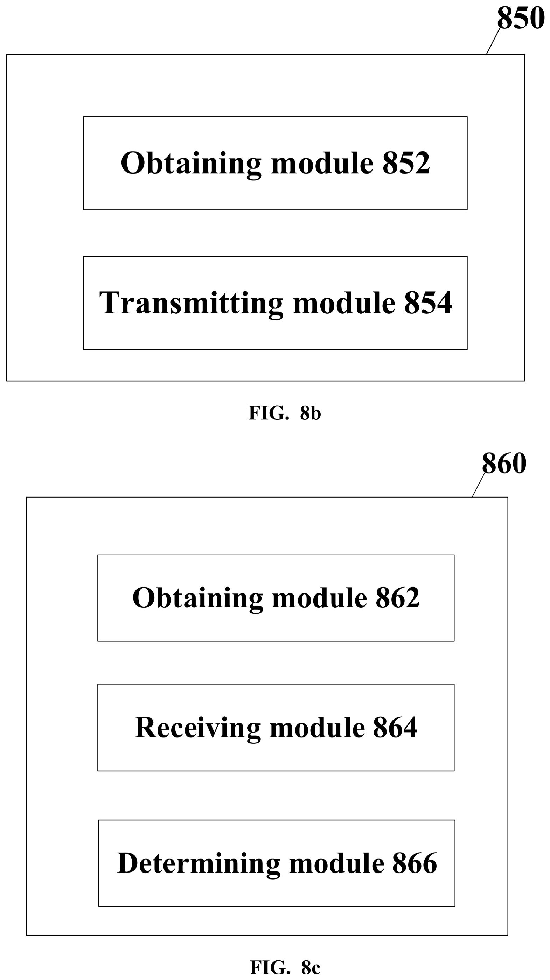

FIG.8b is a block diagram showing a first terminal device according to an embodiment of the disclosure. As shown, the first terminal device 850 comprises an obtaining module 852 and a transmitting module 854. The obtaining module 852 may be configured to obtain at least one privacy policy of the first terminal device. The at least one privacy policy of the first terminal device is related to a link identifier change. The transmitting module 854 may be configured to transmit a request message including information regarding the at least one privacy policy of the first terminal device.

FIG.8c is a block diagram showing a second terminal device according to an embodiment of the disclosure. As shown, the second terminal device 860 comprises an obtaining module 862, a receiving module 864 and a determining module 866. The obtaining module 862 may be configured to obtain at least one privacy policy of the second terminal device, wherein the at least one privacy policy of the second terminal device is related to a link identifier change. The receiving module 864 may be configured to receive a request message from a first terminal device. The determining module 866 may be configured to determine whether the at least one corresponding privacy policy of the first terminal device matches the at least one privacy policy of the second terminal device when the request message includes information regarding at least one corresponding privacy policy of the first terminal device.

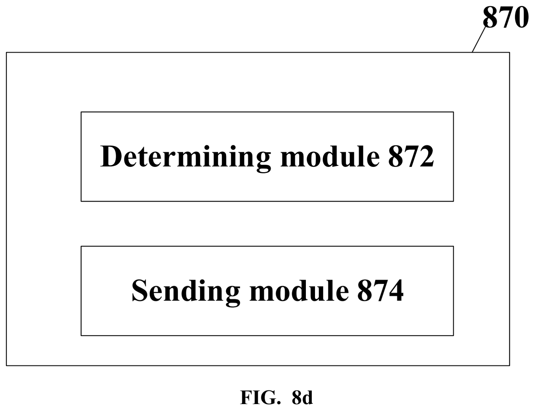

FIG.8d is a block diagram showing a policy provisioning entity according to an embodiment of the disclosure. As shown, the policy provisioning entity 870 comprises a determining module 872 and a sending module 874. The determining module 872 may be configured to determine at least one privacy policy of a terminal device, wherein the at least one privacy policy is related to a link identifier change. The sending module 874 may be configured to send the at least one privacy policy of the terminal device to the terminal device.

Embodiments herein afford many advantages, of which a non-exhaustive list of examples follows. In some embodiments herein, it can ensure that when one of a pair of terminal devices changes its link identifier (such as Layer-2 ID), the other one of the pair of terminal devices also changes its link identifier (such as Layer-2 ID). In some embodiments herein, the terminal devices can exchange their privacy policies during various procedures such as unicast link establishment, update, modification procedures, thus the terminal devices can decide what to do if their privacy policies do not match. In some embodiments herein, the privacy can be enhanced. A person skilled in the art will recognize additional features and advantages upon reading the following detailed description.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

With function units, the first terminal device, the second terminal device or the policy provisioning entity may not need a fixed processor or memory, any computing resource and storage resource may be arranged from the first terminal device, the second terminal device or the policy provisioning entity in the communication system. The introduction of virtualization technology and network computing technology may improve the usage efficiency of the network resources and the flexibility of the network.

Further, the exemplary overall commutation system including the terminal device and the network node such as base station will be introduced as below.

Embodiments of the present disclosure provide a communication system including a host computer including: processing circuitry configured to provide user data; and a communication interface configured to forward the user data to a cellular network for transmission to a terminal device. The cellular network includes a base station such as the policy provisioning entity above mentioned, and/or the terminal device such as the first terminal device or the second terminal device above mentioned.

In embodiments of the present disclosure, the system further includes the terminal device, wherein the terminal device is configured to communicate with the base station.

In embodiments of the present disclosure, the processing circuitry of the host computer is configured to execute a host application, thereby providing the user data; and the terminal device includes processing circuitry configured to execute a client application associated with the host application.

Embodiments of the present disclosure also provide a communication system including a host computer including: a communication interface configured to receive user data originating from a transmission from a terminal device; a base station. The transmission is from the terminal device to the base station. The base station is the policy provisioning entity above mentioned, and/or the terminal device is the first terminal device or the second terminal device above mentioned.

In embodiments of the present disclosure, the processing circuitry of the host computer is configured to execute a host application. The terminal device is configured to execute a client application associated with the host application, thereby providing the user data to be received by the host computer.

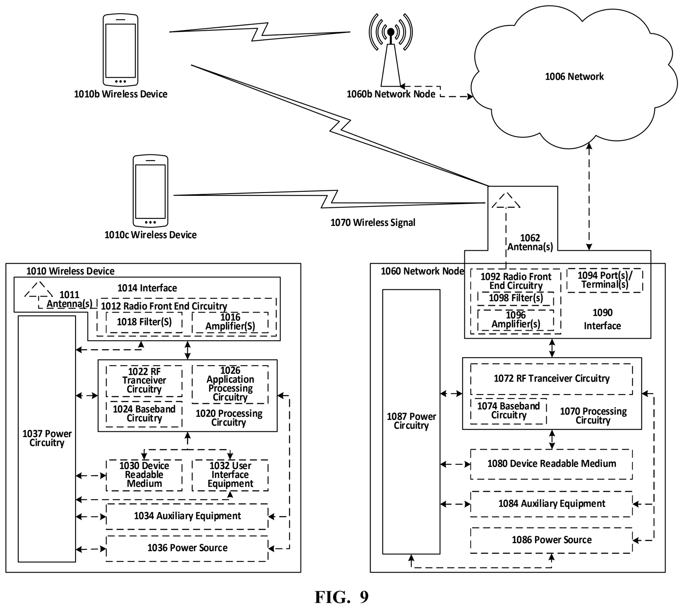

FIG. 9 is a schematic showing a wireless network in accordance with some embodiments.

Although the subject matter described herein may be implemented in any appropriate type of system using any suitable components, the embodiments disclosed herein are described in relation to a wireless network, such as the example wireless network illustrated in FIG. 9. For simplicity, the wireless network of FIG. 9 only depicts network 1006, network nodes 1060 (corresponding to network side node) and 1060b, and WDs (corresponding to terminal device) 1010, 1010b, and 1010c. In practice, a wireless network may further include any additional elements suitable to support communication between wireless devices or between a wireless device and another communication device, such as a landline telephone, a service provider, or any other network node or end device. Of the illustrated components, network node 1060 and wireless device (WD) 1010 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1006 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1060 and WD 1010 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIG. 9, network node 1060 includes processing circuitry 1070, device readable medium 1080, interface 1090, auxiliary equipment 1084, power source 1086, power circuitry 1087, and antenna 1062. Although network node 1060 illustrated in the example wireless network of FIG. 9 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1060 are depicted as single boxes located within a larger box, or nested within multiple boxes, in practice, a network node may comprise multiple different physical components that make up a single illustrated component (e.g., device readable medium 1080 may comprise multiple separate hard drives as well as multiple RAM modules).

Similarly, network node 1060 may be composed of multiple physically separate components (e.g., a NodeB component and a RNC component, or a BTS component and a BSC component, etc.), which may each have their own respective components. In certain scenarios in which network node 1060 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 1060 may be configured to support multiple radio access technologies (RATs). In such embodiments, some components may be duplicated (e.g., separate device readable medium 1080 for the different RATs) and some components may be reused (e.g., the same antenna 1062 may be shared by the RATs). Network node 1060 may also include multiple sets of the various illustrated components for different wireless technologies integrated into network node 1060, such as, for example, GSM, WCDMA, LTE, NR, WiFi, or Bluetooth wireless technologies. These wireless technologies may be integrated into the same or different chip or set of chips and other components within network node 1060.

Processing circuitry 1070 is configured to perform any determining, calculating, or similar operations (e.g., certain obtaining operations) described herein as being provided by a network node. These operations performed by processing circuitry 1070 may include processing information obtained by processing circuitry 1070 by, for example, converting the obtained information into other information, comparing the obtained information or converted information to information stored in the network node, and/or performing one or more operations based on the obtained information or converted information, and as a result of said processing making a determination.

Processing circuitry 1070 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1060 components, such as device readable medium 1080, network node 1060 functionality. For example, processing circuitry 1070 may execute instructions stored in device readable medium 1080 or in memory within processing circuitry 1070. Such functionality may include providing any of the various wireless features, functions, or benefits discussed herein. In some embodiments, processing circuitry 1070 may include a system on a chip (SOC).

In some embodiments, processing circuitry 1070 may include one or more of radio frequency (RF) transceiver circuitry 1072 and baseband processing circuitry 1074. In some embodiments, radio frequency (RF) transceiver circuitry 1072 and baseband processing circuitry 1074 may be on separate chips (or sets of chips), boards, or units, such as radio units and digital units. In alternative embodiments, part or all of RF transceiver circuitry 1072 and baseband processing circuitry 1074 may be on the same chip or set of chips, boards, or units

In certain embodiments, some or all of the functionality described herein as being provided by a network node, base station, eNB or other such network device may be performed by processing circuitry 1070 executing instructions stored on device readable medium 1080 or memory within processing circuitry 1070. In alternative embodiments, some or all of the functionality may be provided by processing circuitry 1070 without executing instructions stored on a separate or discrete device readable medium, such as in a hard-wired manner. In any of those embodiments, whether executing instructions stored on a device readable storage medium or not, processing circuitry 1070 can be configured to perform the described functionality. The benefits provided by such functionality are not limited to processing circuitry 1070 alone or to other components of network node 1060, but are enjoyed by network node 1060 as a whole, and/or by end users and the wireless network generally.

Device readable medium 1080 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1070. Device readable medium 1080 may store any suitable instructions, data or information, including a computer program, software, an application including one or more of logic, rules, code, tables, etc. and/or other instructions capable of being executed by processing circuitry 1070 and, utilized by network node 1060. Device readable medium 1080 may be used to store any calculations made by processing circuitry 1070 and/or any data received via interface 1090. In some embodiments, processing circuitry 1070 and device readable medium 1080 may be considered to be integrated.

Interface 1090 is used in the wired or wireless communication of signaling and/or data between network node 1060, network 1006, and/or WDs 1010. As illustrated, interface 1090 comprises port(s)/terminal(s) 1094 to send and receive data, for example to and from network 1006 over a wired connection. Interface 1090 also includes radio front end circuitry 1092 that may be coupled to, or in certain embodiments a part of, antenna 1062. Radio front end circuitry 1092 comprises filters 1098 and amplifiers 1096. Radio front end circuitry 1092 may be connected to antenna 1062 and processing circuitry 1070. Radio front end circuitry may be configured to condition signals communicated between antenna 1062 and processing circuitry 1070. Radio front end circuitry 1092 may receive digital data that is to be sent out to other network nodes or WDs via a wireless connection. Radio front end circuitry 1092 may convert the digital data into a radio signal having the appropriate channel and bandwidth parameters using a combination of filters 1098 and/or amplifiers 1096. The radio signal may then be transmitted via antenna 1062. Similarly, when receiving data, antenna 1062 may collect radio signals which are then converted into digital data by radio front end circuitry 1092. The digital data may be passed to processing circuitry 1070. In other embodiments, the interface may comprise different components and/or different combinations of components.

In certain alternative embodiments, network node 1060 may not include separate radio front end circuitry 1092, instead, processing circuitry 1070 may comprise radio front end circuitry and may be connected to antenna 1062 without separate radio front end circuitry 1092. Similarly, in some embodiments, all or some of RF transceiver circuitry 1072 may be considered a part of interface 1090. In still other embodiments, interface 1090 may include one or more ports or terminals 1094, radio front end circuitry 1092, and RF transceiver circuitry 1072, as part of a radio unit (not shown), and interface 1090 may communicate with baseband processing circuitry 1074, which is part of a digital unit (not shown).

Antenna 1062 may include one or more antennas, or antenna arrays, configured to send and/or receive wireless signals. Antenna 1062 may be coupled to radio front end circuitry 1090 and may be any type of antenna capable of transmitting and receiving data and/or signals wirelessly. In some embodiments, antenna 1062 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1062 may be separate from network node 1060 and may be connectable to network node 1060 through an interface or port.

Antenna 1062, interface 1090, and/or processing circuitry 1070 may be configured to perform any receiving operations and/or certain obtaining operations described herein as being performed by a network node. Any information, data and/or signals may be received from a wireless device, another network node and/or any other network equipment. Similarly, antenna 1062, interface 1090, and/or processing circuitry 1070 may be configured to perform any transmitting operations described herein as being performed by a network node. Any information, data and/or signals may be transmitted to a wireless device, another network node and/or any other network equipment.

Power circuitry 1087 may comprise, or be coupled to, power management circuitry and is configured to supply the components of network node 1060 with power for performing the functionality described herein. Power circuitry 1087 may receive power from power source 1086. Power source 1086 and/or power circuitry 1087 may be configured to provide power to the various components of network node 1060 in a form suitable for the respective components (e.g., at a voltage and current level needed for each respective component). Power source 1086 may either be included in, or external to, power circuitry 1087 and/or network node 1060. For example, network node 1060 may be connectable to an external power source (e.g., an electricity outlet) via an input circuitry or interface such as an electrical cable, whereby the external power source supplies power to power circuitry 1087. As a further example, power source 1086 may comprise a source of power in the form of a battery or battery pack which is connected to, or integrated in, power circuitry 1087. The battery may provide backup power should the external power source fail. Other types of power sources, such as photovoltaic devices, may also be used.

Alternative embodiments of network node 1060 may include additional components beyond those shown in FIG. 9 that may be responsible for providing certain aspects of the network node's functionality, including any of the functionality described herein and/or any functionality necessary to support the subject matter described herein. For example, network node 1060 may include user interface equipment to allow input of information into network node 1060 and to allow output of information from network node 1060. This may allow a user to perform diagnostic, maintenance, repair, and other administrative functions for network node 1060.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 1010 includes antenna 1011, interface 1014, processing circuitry 1020, device readable medium 1030, user interface equipment 1032, auxiliary equipment 1034, power source 1036 and power circuitry 1037. WD 1010 may include multiple sets of one or more of the illustrated components for different wireless technologies supported by WD 1010, such as, for example, GSM, WCDMA, LTE, NR, WiFi, WiMAX, or Bluetooth wireless technologies, just to mention a few. These wireless technologies may be integrated into the same or different chips or set of chips as other components within WD 1010.

Antenna 1011 may include one or more antennas or antenna arrays, configured to send and/or receive wireless signals, and is connected to interface 1014. In certain alternative embodiments, antenna 1011 may be separate from WD 1010 and be connectable to WD 1010 through an interface or port. Antenna 1011, interface 1014, and/or processing circuitry 1020 may be configured to perform any receiving or transmitting operations described herein as being performed by a WD. Any information, data and/or signals may be received from a network node and/or another WD. In some embodiments, radio front end circuitry and/or antenna 1011 may be considered an interface.

As illustrated, interface 1014 comprises radio front end circuitry 1012 and antenna 1011. Radio front end circuitry 1012 comprise one or more filters 1018 and amplifiers 1016. Radio front end circuitry 1014 is connected to antenna 1011 and processing circuitry 1020, and is configured to condition signals communicated between antenna 1011 and processing circuitry 1020. Radio front end circuitry 1012 may be coupled to or a part of antenna 1011. In some embodiments, WD 1010 may not include separate radio front end circuitry 1012; rather, processing circuitry 1020 may comprise radio front end circuitry and may be connected to antenna 1011. Similarly, in some embodiments, some or all of RF transceiver circuitry 1022 may be considered a part of interface 1014. Radio front end circuitry 1012 may receive digital data that is to be sent out to other network nodes or WDs via a wireless connection. Radio front end circuitry 1012 may convert the digital data into a radio signal having the appropriate channel and bandwidth parameters using a combination of filters 1018 and/or amplifiers 1016. The radio signal may then be transmitted via antenna 1011. Similarly, when receiving data, antenna 1011 may collect radio signals which are then converted into digital data by radio front end circuitry 1012. The digital data may be passed to processing circuitry 1020. In other embodiments, the interface may comprise different components and/or different combinations of components.

Processing circuitry 1020 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1010 components, such as device readable medium 1030, WD 1010 functionality. Such functionality may include providing any of the various wireless features or benefits discussed herein. For example, processing circuitry 1020 may execute instructions stored in device readable medium 1030 or in memory within processing circuitry 1020 to provide the functionality disclosed herein.

As illustrated, processing circuitry 1020 includes one or more of RF transceiver circuitry 1022, baseband processing circuitry 1024, and application processing circuitry 1026. In other embodiments, the processing circuitry may comprise different components and/or different combinations of components. In certain embodiments processing circuitry 1020 of WD 1010 may comprise a SOC. In some embodiments, RF transceiver circuitry 1022, baseband processing circuitry 1024, and application processing circuitry 1026 may be on separate chips or sets of chips. In alternative embodiments, part or all of baseband processing circuitry 1024 and application processing circuitry 1026 may be combined into one chip or set of chips, and RF transceiver circuitry 1022 may be on a separate chip or set of chips. In still alternative embodiments, part or all of RF transceiver circuitry 1022 and baseband processing circuitry 1024 may be on the same chip or set of chips, and application processing circuitry 1026 may be on a separate chip or set of chips. In yet other alternative embodiments, part or all of RF transceiver circuitry 1022, baseband processing circuitry 1024, and application processing circuitry 1026 may be combined in the same chip or set of chips. In some embodiments, RF transceiver circuitry 1022 may be a part of interface 1014. RF transceiver circuitry 1022 may condition RF signals for processing circuitry 1020.

In certain embodiments, some or all of the functionality described herein as being performed by a WD may be provided by processing circuitry 1020 executing instructions stored on device readable medium 1030, which in certain embodiments may be a computer-readable storage medium. In alternative embodiments, some or all of the functionality may be provided by processing circuitry 1020 without executing instructions stored on a separate or discrete device readable storage medium, such as in a hard-wired manner. In any of those particular embodiments, whether executing instructions stored on a device readable storage medium or not, processing circuitry 1020 can be configured to perform the described functionality. The benefits provided by such functionality are not limited to processing circuitry 1020 alone or to other components of WD 1010, but are enjoyed by WD 1010 as a whole, and/or by end users and the wireless network generally.

Processing circuitry 1020 may be configured to perform any determining, calculating, or similar operations (e.g., certain obtaining operations) described herein as being performed by a WD. These operations, as performed by processing circuitry 1020, may include processing information obtained by processing circuitry 1020 by, for example, converting the obtained information into other information, comparing the obtained information or converted information to information stored by WD 1010, and/or performing one or more operations based on the obtained information or converted information, and as a result of said processing making a determination.

Device readable medium 1030 may be operable to store a computer program, software, an application including one or more of logic, rules, code, tables, etc. and/or other instructions capable of being executed by processing circuitry 1020. Device readable medium 1030 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1020. In some embodiments, processing circuitry 1020 and device readable medium 1030 may be considered to be integrated.

User interface equipment 1032 may provide components that allow for a human user to interact with WD 1010. Such interaction may be of many forms, such as visual, audial, tactile, etc. User interface equipment 1032 may be operable to produce output to the user and to allow the user to provide input to WD 1010. The type of interaction may vary depending on the type of user interface equipment 1032 installed in WD 1010. For example, if WD 1010 is a smart phone, the interaction may be via a touch screen; if WD 1010 is a smart meter, the interaction may be through a screen that provides usage (e.g., the number of gallons used) or a speaker that provides an audible alert (e.g., if smoke is detected). User interface equipment 1032 may include input interfaces, devices and circuits, and output interfaces, devices and circuits. User interface equipment 1032 is configured to allow input of information into WD 1010, and is connected to processing circuitry 1020 to allow processing circuitry 1020 to process the input information. User interface equipment 1032 may include, for example, a microphone, a proximity or other sensor, keys/buttons, a touch display, one or more cameras, a USB port, or other input circuitry. User interface equipment 1032 is also configured to allow output of information from WD 1010, and to allow processing circuitry 1020 to output information from WD 1010. User interface equipment 1032 may include, for example, a speaker, a display, vibrating circuitry, a USB port, a headphone interface, or other output circuitry. Using one or more input and output interfaces, devices, and circuits, of user interface equipment 1032, WD 1010 may communicate with end users and/or the wireless network, and allow them to benefit from the functionality described herein.

Auxiliary equipment 1034 is operable to provide more specific functionality which may not be generally performed by WDs. This may comprise specialized sensors for doing measurements for various purposes, interfaces for additional types of communication such as wired communications etc. The inclusion and type of components of auxiliary equipment 1034 may vary depending on the embodiment and/or scenario.

Power source 1036 may, in some embodiments, be in the form of a battery or battery pack. Other types of power sources, such as an external power source (e.g., an electricity outlet), photovoltaic devices or power cells, may also be used. WD 1010 may further comprise power circuitry 1037 for delivering power from power source 1036 to the various parts of WD 1010 which need power from power source 1036 to carry out any functionality described or indicated herein. Power circuitry 1037 may in certain embodiments comprise power management circuitry. Power circuitry 1037 may additionally or alternatively be operable to receive power from an external power source; in which case WD 1010 may be connectable to the external power source (such as an electricity outlet) via input circuitry or an interface such as an electrical power cable. Power circuitry 1037 may also in certain embodiments be operable to deliver power from an external power source to power source 1036. This may be, for example, for the charging of power source 1036. Power circuitry 1037 may perform any formatting, converting, or other modification to the power from power source 1036 to make the power suitable for the respective components of WD 1010 to which power is supplied.

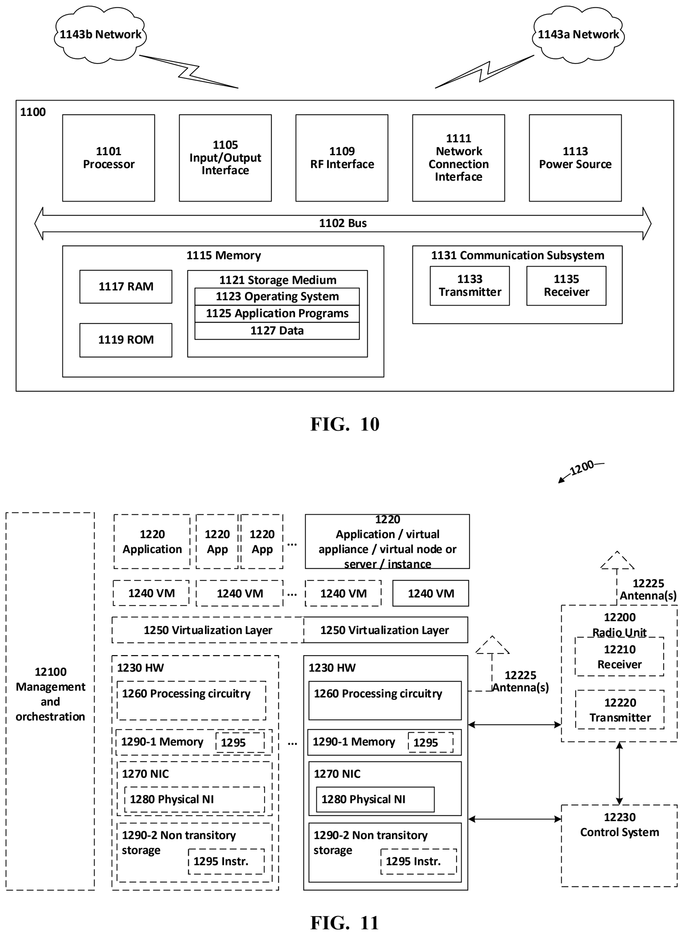

FIG. 10 is a schematic showing a user equipment in accordance with some embodiments.

FIG. 10 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 1100 may be any UE identified by the 3rd Generation Partnership Project (3GPP), including a NB-IoT UE, a machine type communication (MTC) UE, and/or an enhanced MTC (eMTC) UE. UE 1100, as illustrated in FIG. 10, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although FIG. 10 is a UE, the components discussed herein are equally applicable to a WD, and vice-versa.

In FIG. 10, UE 1100 includes processing circuitry 1101 that is operatively coupled to input/output interface 1105, radio frequency (RF) interface 1109, network connection interface 1111, memory 1115 including random access memory (RAM) 1117, read-only memory (ROM) 1119, and storage medium 1121 or the like, communication subsystem 1131, power source 1133, and/or any other component, or any combination thereof. Storage medium 1121 includes operating system 1123, application program 1125, and data 1127. In other embodiments, storage medium 1121 may include other similar types of information. Certain UEs may utilize all of the components shown in FIG. 10, or only a subset of the components. The level of integration between the components may vary from one UE to another UE. Further, certain UEs may contain multiple instances of a component, such as multiple processors, memories, transceivers, transmitters, receivers, etc.

In FIG. 10, processing circuitry 1101 may be configured to process computer instructions and data. Processing circuitry 1101 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1101 may include two central processing units (CPUs). Data may be information in a form suitable for use by a computer.

In the depicted embodiment, input/output interface 1105 may be configured to provide a communication interface to an input device, output device, or input and output device. UE 1100 may be configured to use an output device via input/output interface 1105. An output device may use the same type of interface port as an input device. For example, a USB port may be used to provide input to and output from UE 1100. The output device may be a speaker, a sound card, a video card, a display, a monitor, a printer, an actuator, an emitter, a smartcard, another output device, or any combination thereof. UE 1100 may be configured to use an input device via input/output interface 1105 to allow a user to capture information into UE 1100. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIG. 10, RF interface 1109 may be configured to provide a communication interface to RF components such as a transmitter, a receiver, and an antenna. Network connection interface 1111 may be configured to provide a communication interface to network 1143a. Network 1143a may encompass wired and/or wireless networks such as a local-area network (LAN), a wide-area network (WAN), a computer network, a wireless network, a telecommunications network, another like network or any combination thereof. For example, network 1143a may comprise a Wi-Fi network. Network connection interface 1111 may be configured to include a receiver and a transmitter interface used to communicate with one or more other devices over a communication network according to one or more communication protocols, such as Ethernet, TCP/IP, SONET, ATM, or the like. Network connection interface 1111 may implement receiver and transmitter functionality appropriate to the communication network links (e.g., optical, electrical, and the like). The transmitter and receiver functions may share circuit components, software or firmware, or alternatively may be implemented separately.

RAM 1117 may be configured to interface via bus 1102 to processing circuitry 1101 to provide storage or caching of data or computer instructions during the execution of software programs such as the operating system, application programs, and device drivers. ROM 1119 may be configured to provide computer instructions or data to processing circuitry 1101. For example, ROM 1119 may be configured to store invariant low-level system code or data for basic system functions such as basic input and output (I/O), startup, or reception of keystrokes from a keyboard that are stored in a non-volatile memory. Storage medium 1121 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1121 may be configured to include operating system 1123, application program 1125 such as a web browser application, a widget or gadget engine or another application, and data file 1127. Storage medium 1121 may store, for use by UE 1100, any of a variety of various operating systems or combinations of operating systems.

Storage medium 1121 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1121 may allow UE 1100 to access computer-executable instructions, application programs or the like, stored on transitory or non-transitory memory media, to off-load data, or to upload data. An article of manufacture, such as one utilizing a communication system may be tangibly embodied in storage medium 1121, which may comprise a device readable medium.

In FIG. 10, processing circuitry 1101 may be configured to communicate with network 1143b using communication subsystem 1131. Network 1143a and network 1143b may be the same network or networks or different network or networks. Communication subsystem 1131 may be configured to include one or more transceivers used to communicate with network 1143b. For example, communication subsystem 1131 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 1133 and/or receiver 1135 to implement transmitter or receiver functionality, respectively, appropriate to the RAN links (e.g., frequency allocations and the like). Further, transmitter 1133 and receiver 1135 of each transceiver may share circuit components, software or firmware, or alternatively may be implemented separately.

In the illustrated embodiment, the communication functions of communication subsystem 1131 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1131 may include cellular communication, Wi-Fi communication, Bluetooth communication, and GPS communication. Network 1143b may encompass wired and/or wireless networks such as a local-area network (LAN), a wide-area network (WAN), a computer network, a wireless network, a telecommunications network, another like network or any combination thereof. For example, network 1143b may be a cellular network, a Wi-Fi network, and/or a near-field network. Power source 1113 may be configured to provide alternating current (AC) or direct current (DC) power to components of UE 1100.

The features, benefits and/or functions described herein may be implemented in one of the components of UE 1100 or partitioned across multiple components of UE 1100. Further, the features, benefits, and/or functions described herein may be implemented in any combination of hardware, software or firmware. In one example, communication subsystem 1131 may be configured to include any of the components described herein. Further, processing circuitry 1101 may be configured to communicate with any of such components over bus 1102. In another example, any of such components may be represented by program instructions stored in memory that when executed by processing circuitry 1101 perform the corresponding functions described herein. In another example, the functionality of any of such components may be partitioned between processing circuitry 1101 and communication subsystem 1131. In another example, the non-computationally intensive functions of any of such components may be implemented in software or firmware and the computationally intensive functions may be implemented in hardware.

FIG. 11 is a schematic showing a virtualization environment in accordance with some embodiments.

FIG. 11 is a schematic block diagram illustrating a virtualization environment 1200 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1200 hosted by one or more of hardware nodes 1230. Further, in embodiments in which the virtual node is not a radio access node or does not require radio connectivity (e.g., a core network node), then the network node may be entirely virtualized.

The functions may be implemented by one or more applications 1220 (which may alternatively be called software instances, virtual appliances, network functions, virtual nodes, virtual network functions, etc.) operative to implement some of the features, functions, and/or benefits of some of the embodiments disclosed herein. Applications 1220 are run in virtualization environment 1200 which provides hardware 1230 comprising processing circuitry 1260 and memory 1290. Memory 1290 contains instructions 1295 executable by processing circuitry 1260 whereby application 1220 is operative to provide one or more of the features, benefits, and/or functions disclosed herein.

Virtualization environment 1200, comprises general-purpose or special-purpose network hardware devices 1230 comprising a set of one or more processors or processing circuitry 1260, which may be commercial off-the-shelf (COTS) processors, dedicated Application Specific Integrated Circuits (ASICs), or any other type of processing circuitry including digital or analog hardware components or special purpose processors. Each hardware device may comprise memory 1290-1 which may be non-persistent memory for temporarily storing instructions 1295 or software executed by processing circuitry 1260. Each hardware device may comprise one or more network interface controllers (NICs) 1270, also known as network interface cards, which include physical network interface 1280. Each hardware device may also include non-transitory, persistent, machine-readable storage media 1290-2 having stored therein software 1295 and/or instructions executable by processing circuitry 1260. Software 1295 may include any type of software including software for instantiating one or more virtualization layers 1250 (also referred to as hypervisors), software to execute virtual machines 1240 as well as software allowing it to execute functions, features and/or benefits described in relation with some embodiments described herein.

Virtual machines 1240, comprise virtual processing, virtual memory, virtual networking or interface and virtual storage, and may be run by a corresponding virtualization layer 1250 or hypervisor. Different embodiments of the instance of virtual appliance 1220 may be implemented on one or more of virtual machines 1240, and the implementations may be made in different ways.

During operation, processing circuitry 1260 executes software 1295 to instantiate the hypervisor or virtualization layer 1250, which may sometimes be referred to as a virtual machine monitor (VMM). Virtualization layer 1250 may present a virtual operating platform that appears like networking hardware to virtual machine 1240.

As shown in FIG. 11, hardware 1230 may be a standalone network node with generic or specific components. Hardware 1230 may comprise antenna 12225 and may implement some functions via virtualization. Alternatively, hardware 1230 may be part of a larger cluster of hardware (e.g. such as in a data center or customer premise equipment (CPE)) where many hardware nodes work together and are managed via management and orchestration (MANO) 12100, which, among others, oversees lifecycle management of applications 1220.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1240 may be a software implementation of a physical machine that runs programs as if they were executing on a physical, non-virtualized machine. Each of virtual machines 1240, and that part of hardware 1230 that executes that virtual machine, be it hardware dedicated to that virtual machine and/or hardware shared by that virtual machine with others of the virtual machines 1240, forms a separate virtual network elements (VNE).

Still in the context of NFV, Virtual Network Function (VNF) is responsible for handling specific network functions that run in one or more virtual machines 1240 on top of hardware networking infrastructure 1230 and corresponds to application 1220 in FIG. 11.

In some embodiments, one or more radio units 12200 that each include one or more transmitters 12220 and one or more receivers 12210 may be coupled to one or more antennas 12225. Radio units 12200 may communicate directly with hardware nodes 1230 via one or more appropriate network interfaces and may be used in combination with the virtual components to provide a virtual node with radio capabilities, such as a radio access node or a base station.

In some embodiments, some signaling can be effected with the use of control system 12230 which may alternatively be used for communication between the hardware nodes 1230 and radio units 12200.

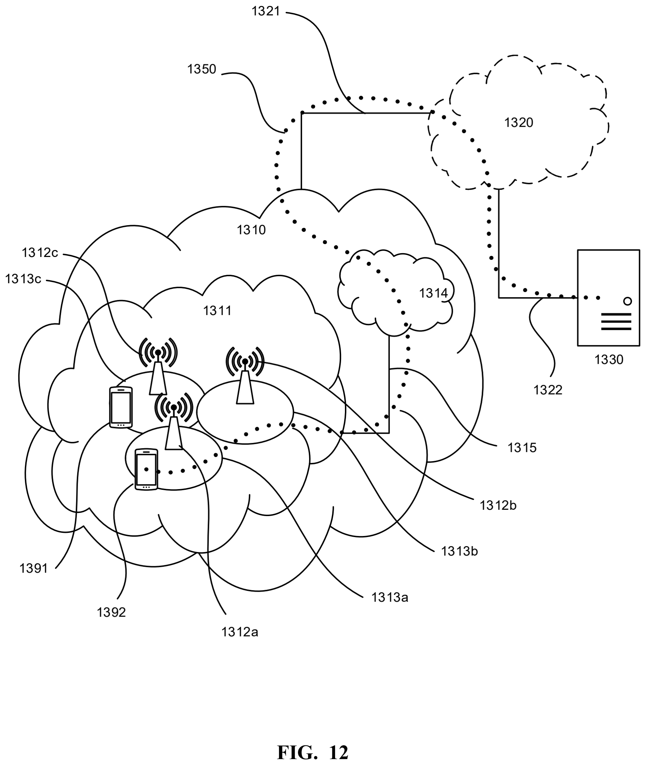

FIG. 12 is a schematic showing a telecommunication network connected via an intermediate network to a host computer in accordance with some embodiments.

With reference to FIG. 12, in accordance with an embodiment, a communication system includes telecommunication network 1310, such as a 3GPP-type cellular network, which comprises access network 1311, such as a radio access network, and core network 1314. Access network 1311 comprises a plurality of base stations 1312a, 1312b, 1312c, such as NBs, eNBs, gNBs or other types of wireless access points, each defining a corresponding coverage area 1313a, 1313b, 1313c. Each base station 1312a, 1312b, 1312c is connectable to core network 1314 over a wired or wireless connection 1315. A first UE 1391 located in coverage area 1313c is configured to wirelessly connect to, or be paged by, the corresponding base station 1312c. A second UE 1392 in coverage area 1313a is wirelessly connectable to the corresponding base station 1312a. While a plurality of UEs 1391, 1392 are illustrated in this example, the disclosed embodiments are equally applicable to a situation where a sole UE is in the coverage area or where a sole UE is connecting to the corresponding base station 1312.

Telecommunication network 1310 is itself connected to host computer 1330, which may be embodied in the hardware and/or software of a standalone server, a cloud-implemented server, a distributed server or as processing resources in a server farm. Host computer 1330 may be under the ownership or control of a service provider, or may be operated by the service provider or on behalf of the service provider. Connections 1321 and 1322 between telecommunication network 1310 and host computer 1330 may extend directly from core network 1314 to host computer 1330 or may go via an optional intermediate network 1320. Intermediate network 1320 may be one of, or a combination of more than one of, a public, private or hosted network; intermediate network 1320, if any, may be a backbone network or the Internet; in particular, intermediate network 1320 may comprise two or more sub-networks (not shown).

The communication system of FIG. 12 as a whole enables connectivity between the connected UEs 1391, 1392 and host computer 1330. The connectivity may be described as an over-the-top (OTT) connection 1350. Host computer 1330 and the connected UEs 1391, 1392 are configured to communicate data and/or signaling via OTT connection 1350, using access network 1311, core network 1314, any intermediate network 1320 and possible further infrastructure (not shown) as intermediaries. OTT connection 1350 may be transparent in the sense that the participating communication devices through which OTT connection 1350 passes are unaware of routing of uplink and downlink communications. For example, base station 1312 may not or need not be informed about the past routing of an incoming downlink communication with data originating from host computer 1330 to be forwarded (e.g., handed over) to a connected UE 1391. Similarly, base station 1312 need not be aware of the future routing of an outgoing uplink communication originating from the UE 1391 towards the host computer 1330.

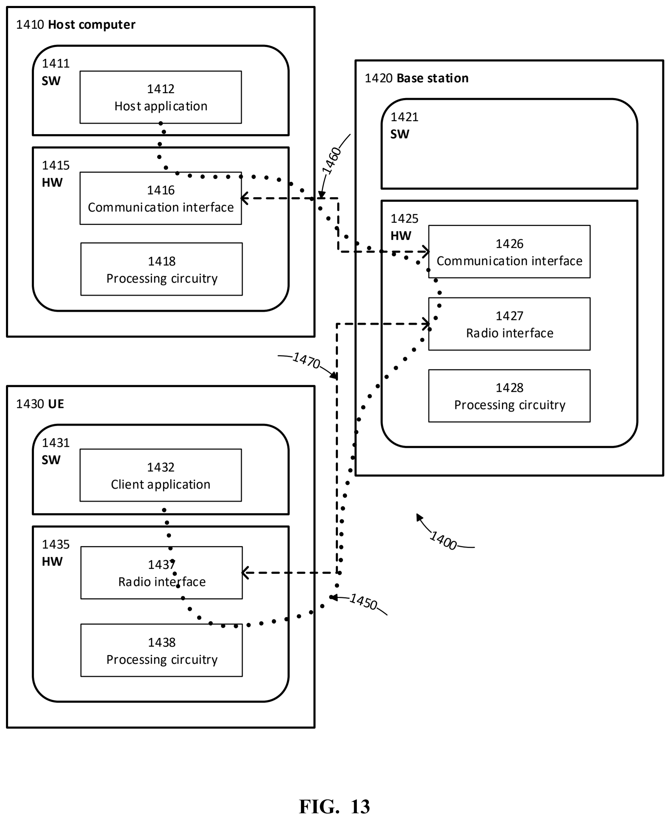

FIG. 13 is a schematic showing a host computer communicating via a base station with a user equipment over a partially wireless connection in accordance with some embodiments.

Example implementations, in accordance with an embodiment, of the UE, base station and host computer discussed in the preceding paragraphs will now be described with reference to FIG. 13. In communication system 1400, host computer 1410 comprises hardware 1415 including communication interface 1416 configured to set up and maintain a wired or wireless connection with an interface of a different communication device of communication system 1400. Host computer 1410 further comprises processing circuitry 1418, which may have storage and/or processing capabilities. In particular, processing circuitry 1418 may comprise one or more programmable processors, application-specific integrated circuits, field programmable gate arrays or combinations of these (not shown) adapted to execute instructions. Host computer 1410 further comprises software 1411, which is stored in or accessible by host computer 1410 and executable by processing circuitry 1418. Software 1411 includes host application 1412. Host application 1412 may be operable to provide a service to a remote user, such as UE 1430 connecting via OTT connection 1450 terminating at UE 1430 and host computer 1410. In providing the service to the remote user, host application 1412 may provide user data which is transmitted using OTT connection 1450.

Communication system 1400 further includes base station 1420 provided in a telecommunication system and comprising hardware 1425 enabling it to communicate with host computer 1410 and with UE 1430. Hardware 1425 may include communication interface 1426 for setting up and maintaining a wired or wireless connection with an interface of a different communication device of communication system 1400, as well as radio interface 1427 for setting up and maintaining at least wireless connection 1470 with UE 1430 located in a coverage area (not shown in FIG. 13) served by base station 1420. Communication interface 1426 may be configured to facilitate connection 1460 to host computer 1410. Connection 1460 may be direct or it may pass through a core network (not shown in FIG. 13) of the telecommunication system and/or through one or more intermediate networks outside the telecommunication system. In the embodiment shown, hardware 1425 of base station 1420 further includes processing circuitry 1428, which may comprise one or more programmable processors, application-specific integrated circuits, field programmable gate arrays or combinations of these (not shown) adapted to execute instructions. Base station 1420 further has software 1421 stored internally or accessible via an external connection.

Communication system 1400 further includes UE 1430 already referred to. Its hardware 1435 may include radio interface 1437 configured to set up and maintain wireless connection 1470 with a base station serving a coverage area in which UE 1430 is currently located. Hardware 1435 of UE 1430 further includes processing circuitry 1438, which may comprise one or more programmable processors, application-specific integrated circuits, field programmable gate arrays or combinations of these (not shown) adapted to execute instructions. UE 1430 further comprises software 1431, which is stored in or accessible by UE 1430 and executable by processing circuitry 1438. Software 1431 includes client application 1432. Client application 1432 may be operable to provide a service to a human or non-human user via UE 1430, with the support of host computer 1410. In host computer 1410, an executing host application 1412 may communicate with the executing client application 1432 via OTT connection 1450 terminating at UE 1430 and host computer 1410. In providing the service to the user, client application 1432 may receive request data from host application 1412 and provide user data in response to the request data. OTT connection 1450 may transfer both the request data and the user data. Client application 1432 may interact with the user to generate the user data that it provides.

It is noted that host computer 1410, base station 1420 and UE 1430 illustrated in FIG. 13 may be similar or identical to host computer 1330, one of base stations 1312a, 1312b, 1312c and one of UEs 1391, 1392 of FIG. 12, respectively. This is to say, the inner workings of these entities may be as shown in FIG. 13 and independently, the surrounding network topology may be that of FIG. 12.

In FIG. 13, OTT connection 1450 has been drawn abstractly to illustrate the communication between host computer 1410 and UE 1430 via base station 1420, without explicit reference to any intermediary devices and the precise routing of messages via these devices. Network infrastructure may determine the routing, which it may be configured to hide from UE 1430 or from the service provider operating host computer 1410, or both. While OTT connection 1450 is active, the network infrastructure may further take decisions by which it dynamically changes the routing (e.g., on the basis of load balancing consideration or reconfiguration of the network).

Wireless connection 1470 between UE 1430 and base station 1420 is in accordance with the teachings of the embodiments described throughout this disclosure. One or more of the various embodiments improve the performance of OTT services provided to UE 1430 using OTT connection 1450, in which wireless connection 1470 forms the last segment. More precisely, the teachings of these embodiments may improve the latency, and power consumption for a reactivation of the network connection, and thereby provide benefits, such as reduced user waiting time, enhanced rate control.

A measurement procedure may be provided for the purpose of monitoring data rate, latency and other factors on which the one or more embodiments improve. There may further be an optional network functionality for reconfiguring OTT connection 1450 between host computer 1410 and UE 1430, in response to variations in the measurement results. The measurement procedure and/or the network functionality for reconfiguring OTT connection 1450 may be implemented in software 1411 and hardware 1415 of host computer 1410 or in software 1431 and hardware 1435 of UE 1430, or both. In embodiments, sensors (not shown) may be deployed in or in association with communication devices through which OTT connection 1450 passes; the sensors may participate in the measurement procedure by supplying values of the monitored quantities exemplified above, or supplying values of other physical quantities from which software 1411, 1431 may compute or estimate the monitored quantities. The reconfiguring of OTT connection 1450 may include message format, retransmission settings, preferred routing etc.; the reconfiguring need not affect base station 1420, and it may be unknown or imperceptible to base station 1420. Such procedures and functionalities may be known and practiced in the art. In certain embodiments, measurements may involve proprietary UE signaling facilitating host computer 1410's measurements of throughput, propagation times, latency and the like. The measurements may be implemented in that software 1411 and 1431 causes messages to be transmitted, in particular empty or 'dummy' messages, using OTT connection 1450 while it monitors propagation times, errors etc.

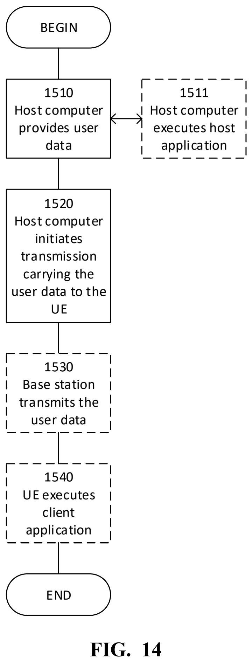

FIG. 14 is a schematic showing methods implemented in a communication system including a host computer, a base station and a user equipment in accordance with some embodiments.

FIG. 14 is a flowchart illustrating a method implemented in a communication system, in accordance with one embodiment. The communication system includes a host computer, a base station and a UE which may be those described with reference to FIGs. 12 and 13. For simplicity of the present disclosure, only drawing references to FIG. 14 will be included in this section. In step 1510, the host computer provides user data. In substep 1511 (which may be optional) of step 1510, the host computer provides the user data by executing a host application. In step 1520, the host computer initiates a transmission carrying the user data to the UE. In step 1530 (which may be optional), the base station transmits to the UE the user data which was carried in the transmission that the host computer initiated, in accordance with the teachings of the embodiments described throughout this disclosure. In step 1540 (which may also be optional), the UE executes a client application associated with the host application executed by the host computer.

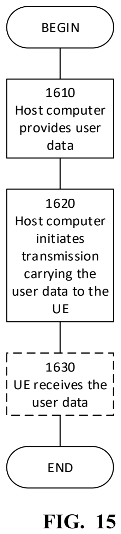

FIG. 15 is a schematic showing methods implemented in a communication system including a host computer, a base station and a user equipment in accordance with some embodiments.

FIG. 15 is a flowchart illustrating a method implemented in a communication system, in accordance with one embodiment. The communication system includes a host computer, a base station and a UE which may be those described with reference to FIG. 12 and 13. For simplicity of the present disclosure, only drawing references to FIG. 15 will be included in this section. In step 1610 of the method, the host computer provides user data. In an optional substep (not shown) the host computer provides the user data by executing a host application. In step 1620, the host computer initiates a transmission carrying the user data to the UE. The transmission may pass via the base station, in accordance with the teachings of the embodiments described throughout this disclosure. In step 1630 (which may be optional), the UE receives the user data carried in the transmission.

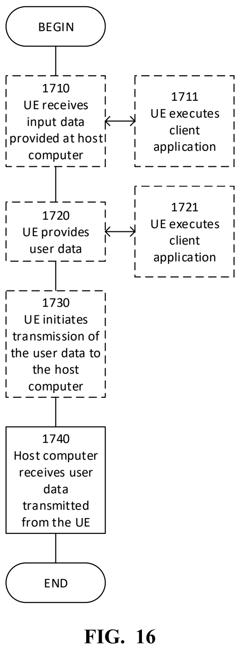

FIG. 16 is a schematic showing methods implemented in a communication system including a host computer, a base station and a user equipment in accordance with some embodiments.

FIG. 16 is a flowchart illustrating a method implemented in a communication system, in accordance with one embodiment. The communication system includes a host computer, a base station and a UE which may be those described with reference to FIGs. 12 and 13. For simplicity of the present disclosure, only drawing references to FIG. 16 will be included in this section. In step 1710 (which may be optional), the UE receives input data provided by the host computer. Additionally or alternatively, in step 1720, the UE provides user data. In substep 1721 (which may be optional) of step 1720, the UE provides the user data by executing a client application. In substep 1711 (which may be optional) of step 1710, the UE executes a client application which provides the user data in reaction to the received input data provided by the host computer. In providing the user data, the executed client application may further consider user input received from the user. Regardless of the specific manner in which the user data was provided, the UE initiates, in substep 1730 (which may be optional), transmission of the user data to the host computer. In step 1740 of the method, the host computer receives the user data transmitted from the UE, in accordance with the teachings of the embodiments described throughout this disclosure.

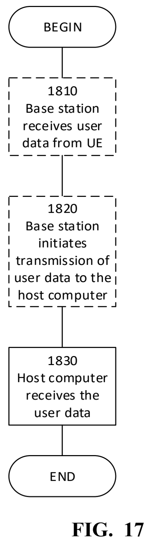

FIG. 17 is a schematic showing methods implemented in a communication system including a host computer, a base station and a user equipment in accordance with some embodiments.

FIG. 17 is a flowchart illustrating a method implemented in a communication system, in accordance with one embodiment. The communication system includes a host computer, a base station and a UE which may be those described with reference to FIGs. 12 and 13. For simplicity of the present disclosure, only drawing references to FIG. 17 will be included in this section. In step 1810 (which may be optional), in accordance with the teachings of the embodiments described throughout this disclosure, the base station receives user data from the UE. In step 1820 (which may be optional), the base station initiates transmission of the received user data to the host computer. In step 1830 (which may be optional), the host computer receives the user data carried in the transmission initiated by the base station.

According to an aspect of the disclosure it is provided a computer program product being tangibly stored on a computer readable storage medium and including instructions which, when executed on at least one processor, cause the at least one processor to carry out any of the methods as described above.

According to an aspect of the disclosure it is provided a computer-readable storage medium storing instructions which when executed by at least one processor, cause the at least one processor to carry out any of the methods as described above.

In addition, the present disclosure may also provide a carrier containing the computer program as mentioned above, wherein the carrier is one of an electronic signal, optical signal, radio signal, or computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function, or means that may be configured to perform two or more functions. For example, these techniques may be implemented in hardware (one or more apparatuses), firmware (one or more apparatuses), software (one or more modules), or combinations thereof. For a firmware or software, implementation may be made through modules (e.g., procedures, functions, and so on) that perform the functions described herein.

Exemplary embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

It will be obvious to a person skilled in the art that, as the technology advances, the inventive concept can be implemented in various ways. The above described embodiments are given for describing rather than limiting the disclosure, and it is to be understood that modifications and variations may be resorted to without departing from the spirit and scope of the disclosure as those skilled in the art readily understand. Such modifications and variations are considered to be within the scope of the disclosure and the appended claims. The protection scope of the disclosure is defined by the accompanying claims.

For the avoidance of doubt, the following sets of numbered statements set out embodiments of the disclosure:
1. A method (500) at a first terminal device, the method comprising:
   obtaining (502) at least one privacy policy of the first terminal device, wherein the at least one privacy policy of the first terminal device is related to a link identifier change; and
   transmitting (504) a request message including information regarding the at least one privacy policy of the first terminal device.
2. The method according to embodiment 1, wherein obtaining the at least one privacy policy of the first terminal device comprises at least one of:
   obtaining the at least one privacy policy of the first terminal device from a network node;
   obtaining the at least one privacy policy of the first terminal device from a server; and
   obtaining the at least one privacy policy of the first terminal device from the first terminal device.
3. The method according to embodiment 2, wherein the network node is a policy control function entity.
4. The method according to any of embodiments 1-3, wherein the at least one privacy policy of the first terminal device comprises:
   a policy of whether a peer terminal device is required to change the link identifier of the peer terminal device when the first terminal device changes the link identifier of the first terminal device.
5. The method according to any of embodiments 1-4, wherein the information regarding the at least one privacy policy of the first terminal device comprises an indication of the at least one privacy policy of the first terminal device.
6. The method according to embodiment 5, wherein the indication of the at least one privacy policy of the first terminal device is a Boolean value.
7. The method according to any of embodiments 1-6, further comprising. receiving (506), from a second terminal device, a response message including a result of the request, wherein the second terminal device is a peer terminal device of the first terminal device.
8. The method according to embodiment 7, wherein
   the response message is a reject message when the at least one privacy policy of the first terminal device does not match at least one corresponding privacy policy of the second terminal device; and
   the response message is an accept message when the at least one privacy policy of the first terminal device matches the at least one corresponding privacy policy of the second terminal device.
9. The method according to embodiment 7 or 8, wherein when the response message is an accept message, the method further comprises:
   - when the response message does not include information regarding at least one corresponding privacy policy of the second terminal device, releasing (508) the link between the first terminal device and the second terminal device; and/or
   - when the response message further includes the information regarding at least one corresponding privacy policy of the second terminal device,
      determining (510) whether the at least one privacy policy of the first terminal device matches the at least one corresponding privacy policy of the second terminal device;
      when the at least one privacy policy of the first terminal device matches the at least one corresponding privacy policy of the second terminal device, transmitting (512) data over the link between the first terminal device and the second terminal device; and
      when the at least one privacy policy of the first terminal device does not match the at least one corresponding privacy policy of the second terminal device, releasing (514) the link between the first terminal device and the second terminal device.
10. The method according to embodiment 9, wherein the information regarding at least one corresponding privacy policy of the second terminal device comprises an indication of the at least one corresponding privacy policy of the second terminal device.
11. The method according to embodiment 10, wherein the indication of the at least one corresponding privacy policy of the second terminal device is a Boolean value.
12. The method according to any of embodiments 7-11, wherein when the request message is transmitted via broadcast, the second terminal device uses at least one announced service over a unicast link with the first terminal device.
13. The method according to any of embodiments 1-12, wherein the link identifier is a layer-2 identifier.
14. The method according to any of embodiments 1-13, wherein the link is a PC5 unicast link.
15. The method according to any of embodiments 1-14, wherein the request message comprises at least one of:
   a link establishment request message;
   a link identifier update request message; and
   a link modification request message.
16. The method according to any of embodiments 1-15, wherein the request message is transmitted via broadcast or unicast.
17. A method (600) at a second terminal device, the method comprising:
   obtaining (602) at least one privacy policy of the second terminal device, wherein the at least one privacy policy of the second terminal device is related to a link identifier change;
   receiving (604) a request message from a first terminal device; and
   when the request message includes information regarding at least one corresponding privacy policy of the first terminal device, determining (606) whether the at least one corresponding privacy policy of the first terminal device matches the at least one privacy policy of the second terminal device.
18. The method according to embodiment 17, wherein obtaining the at least one privacy policy of the second terminal device comprises at least one of:
   obtaining the at least one privacy policy of the second terminal device from a network node;
   obtaining the at least one privacy policy of the second terminal device from a server; and
   obtaining the at least one privacy policy of the second terminal device from the second terminal device.
19. The method according to embodiment 18, wherein the network node is a policy control function entity.
20. The method according to any of embodiments 17-19, wherein:
   the at least one corresponding privacy policy of the first terminal device comprises a policy of whether a peer terminal device is required to change the link identifier of the peer terminal device when the first terminal device changes the link identifier of the first terminal device; and
   the at least one privacy policy of the second terminal device comprises a policy of whether a peer terminal device is required to change the link identifier of the peer terminal device when the second terminal device changes the link identifier of the second terminal device.
21. The method according to any of embodiments 17-20, wherein the information regarding the at least one corresponding privacy policy of the first terminal device comprises an indication of the at least one corresponding privacy policy of the first terminal device.
22. The method according to embodiment 21, wherein the indication of the at least one corresponding privacy policy of the first terminal device is a Boolean value.
23. The method according to any of embodiments 17-22, further comprising:
   transmitting (608), to the first terminal device, a response message including a result of the request.
24. The method according to embodiment 23, wherein
   the response message is a reject message when the at least one corresponding privacy policy of the first terminal device does not match the at least one privacy policy of the second terminal device or when the request message does not include information regarding at least one corresponding privacy policy of the first terminal device; and
   the response message is an accept message when the at least one corresponding privacy policy of the first terminal device matches the at least one privacy policy of the second terminal device.
25. The method according to embodiment 23 or 24, wherein when the response message is an accept message, the response message further includes information regarding the at least one privacy policy of the second terminal device.
26. The method according to embodiment 25, wherein the information regarding the at least one privacy policy of the second terminal device comprises an indication of the at least one privacy policy of the second terminal device.
27. The method according to embodiment 26, wherein the indication of the at least one privacy policy of the second terminal device is a Boolean value.
28. The method according to any of embodiments 17-27, wherein the link identifier is a layer-2 identifier.
29. The method according to any of embodiments 17-28, wherein the link is a PC5 unicast link.
30. The method according to any of embodiments 17-29, the request message comprises at least one of:
   a link establishment request message;
   a link identifier update request message; and
   a link modification request message.
31. The method according to any of embodiments 17-30, wherein the request message is received via broadcast or unicast.
32. The method according to any of embodiments 17-31, wherein when the request message is received via broadcast, the second terminal device uses at least one announced service over a unicast link with the first terminal device.
33. A method (700) at a policy provisioning entity, the method comprising:
   determining (702) at least one privacy policy of a terminal device, wherein the at least one privacy policy is related to a link identifier change; and
   sending (704) the at least one privacy policy of the terminal device to the terminal device.
34. The method according to embodiment 33, wherein the at least one privacy policy of the terminal device comprises:
   a policy of whether a peer terminal device is required to change the link identifier of the peer terminal device when the terminal device changes the link identifier of the terminal device.
35. The method according to any of embodiments 33-34, wherein the link identifier is a layer-2 identifier.
36. The method according to any of embodiments 33-35, wherein the link is a PC5 unicast link.
37. The method according to any of embodiments 33-36, wherein the policy provisioning entity comprises at least one of a network node, a server and the policy provisioning entity in the terminal device.
38. The method according to embodiment 37, wherein the server is an application server.
39. The method according to embodiment 37, wherein the network node is a policy control function entity.
40. A first terminal device (800), comprising:
   a processor (821); and
   a memory (822), the memory (822) containing instructions executable by the processor (821), whereby the first terminal device (800) is operative to:
      obtain at least one privacy policy of the first terminal device, wherein the at least one privacy policy of the first terminal device is related to a link identifier change; and
      transmit a request message including information regarding the at least one privacy policy of the first terminal device.
41. The first terminal device according to embodiment 40, wherein the first terminal device is operative to perform the method according to any of embodiments 2 to 16.
42. A second terminal device (800), comprising:
   a processor (821); and
   a memory (822), the memory (822) containing instructions executable by the processor (821), whereby the second terminal device (800) is operative to:
      obtain at least one privacy policy of the second terminal device, wherein the at least one privacy policy of the second terminal device is related to a link identifier change;
      receive a request message from a first terminal device; and
      when the request message includes information regarding at least one corresponding privacy policy of the first terminal device, determine whether the at least one corresponding privacy policy of the first terminal device matches the at least one privacy policy of the second terminal device.
43. The second terminal device according to embodiment 42, wherein the second terminal device is operative to perform the method according to any of embodiments 18 to 32.
44. A policy provisioning entity (800), comprising:
   a processor (821); and
   a memory (822), the memory (822) containing instructions executable by the processor (821), whereby the policy provisioning entity (800) is operative to:
      determine at least one privacy policy of a terminal device, wherein the at least one privacy policy is related to a link identifier change; and
      send the at least one privacy policy of the terminal device to the terminal device.
45. The policy provisioning entity according to embodiment 44, wherein the policy provisioning entity is operative to perform the method according to any of embodiments 34 to 39.
46. A computer-readable storage medium storing instructions which when executed by at least one processor, cause the at least one processor to perform the method according to any one of embodiments 1 to 39.
47. A computer program product comprising instructions which when executed by at least one processor, cause the at least one processor to perform the method according to any of embodiments 1 to 39.

## Claims

1. A method at a first terminal device (800), the method comprising:
establishing (401) a unicast link with a second terminal device (800);
deciding (402) to change from old identifier(s) to new identifier(s) for the first terminal device;
sending (402) a link identifier update request message to the second terminal device using old identifier(s) of the second terminal device, wherein the link identifier update request message comprises the new identifier(s) of the first terminal device; and
receiving (403) a link identifier update response message from the second terminal device using the old identifier(s) of the first terminal device, wherein the link identifier update response message comprises new identifier(s) of the second terminal device.

2. The method of claim 1, further comprising:
sending (404) a link identifier update ack message to the second terminal device using the old identifiers of the second terminal device, wherein the link identifier update ack message comprises the new identifier(s) received from the second terminal device.

3. The method of claim 1 or 2, further comprising:
before the link identifier update ack message is sent, sending or receiving data traffic with the second terminal device using the old identifier(s); and/or
after the link identifier update ack message is sent, sending or receiving (405, 406) data traffic with the second terminal device using the new identifier(s).

4. The method of any one of claim 1 to 3, wherein:
the new identifier(s) of the first terminal device include a new layer-2 identifier and security information for the first terminal device; and
the new identifier(s) of the second terminal device include a new layer-2 identifier and security information for the second terminal device.

5. The method of any one of claims 1 to 4, wherein the new identifier(s) of the first terminal device and the new identifier(s) of the second terminal device are cyphered to protect privacy.

6. The method of any one of claims 1 to 5, wherein the unicast link is a PC5 unicast link and/or the link identifier update request message is sent via unicast.

7. A first terminal device (800), comprising:
a processor (821); and
a memory (822) containing instructions executable by the processor, whereby the first terminal device is operative to perform a method according to any one of claims 1 to 6.

8. A method at a second terminal device (800), the method comprising:
establishing (401) a unicast link with a first terminal device (800);
receiving (402) a link identifier update request message from the first terminal device using old identifier(s) of the second terminal device, wherein the link identifier update request message comprises new identifier(s) of the first terminal device; and
sending (403) a link identifier update response message to the first terminal device using the old identifier(s) of the first terminal device, wherein the link identifier update response message comprises new identifier(s) of the second terminal device.

9. The method of claim 8, further comprising:
receiving (404) a link identifier update ack message from the first terminal device using the old identifiers of the second terminal device, wherein the link identifier update ack message comprises the new identifier(s) of the second terminal device.

10. The method of claim 8 or 9, further comprising:
before the link identifier update ack message is received, sending or receiving data traffic with the first terminal device using the old identifier(s); and/or
after the link identifier update ack message is received, sending or receiving (405, 406) data traffic with the first terminal device using the new identifier(s).

11. The method of any one of claims 8 to 10, wherein:
the new identifier(s) of the first terminal device include a new layer-2 identifier and security information for the first terminal device; and
the new identifier(s) of the second terminal device include a new layer-2 identifier and security information for the second terminal device.

12. The method of any one of claims 8 to 11, wherein the new identifier(s) of the first terminal device and the new identifier(s) of the second terminal device are cyphered to protect privacy.

13. The method of any one of claims 8 to 12, wherein the unicast link is a PC5 unicast link and/or the link identifier update request message is received via unicast.

14. A second terminal device (800), comprising:
a processor (821); and
a memory (822) containing instructions executable by the processor, whereby the second terminal device is operative to perform a method according to any one of claims 8 to 13.

15. A computer program product comprising instructions which when executed by at least one processor, cause the at least one processor to perform a method according to any one of claims 1 to 6 or a method according to any one of claims 8 to 13.
